# FASCICULE DE BREVET EUROPEEN

(11) **EP 3 774 971 B1**
(45) Date de publication et mention de la délivrance du brevet: **07.02.2024**
(21) Numéro de dépôt: 19719576.1
(22) Date de dépôt: 03.04.2019
(51) Int. Cl.: C08G 18/48, C08G 18/64, C08G 18/73, C08G 18/76, C08G 18/79, C08G 18/22, C08G 18/32, C08G 18/42, C08G 18/66, C08G 18/12, C09J 175/08, C08K 3/26

(54) **COMPOSITION A BASE DE POLYURETHANE**
POLYURETHANBASIERTE ZUSAMMENSETZUNG
POLYURETHANE-BASED COMPOSITION

(30) Priorité: 04.04.2018 FR 1852922
(43) Date de publication de la demande: 17.02.2021
(73) Titulaire: Bostik SA, 92700 Colombes (FR)
(72) Inventeur: MICHAUD, Guillaume, 69006 Lyon (FR); WIEGAND, Aurélien, 60280 VENETTE (FR)
(74) Mandataire: Arkema Patent
(86) Numéro de dépôt international: PCT/FR2019/050767
(87) Numéro de publication internationale: WO 2019/193278

(56) Documents cités:
- EP-A1- 1 619 215
- WO-A1-2017/109382
- WO-A1-2018/011491

## Description

### DOMAINE DE L'INVENTION

La présente invention concerne une composition à base de polyuréthane.

L'invention concerne également l'utilisation de ladite composition pour la réparation et/ou le collage semi-structural ou structural de matériaux dans le domaine du transport, de la marine ou de la construction.

### ARRIERE-PLAN TECHNOLOGIQUE

Les compositions adhésives bicomposantes à base de polyuréthane sont couramment utilisées pour obtenir des performances mécaniques élevées. Ces compositions peuvent être sous la forme de deux compositions (ou composants) :
- l'un (appelé composant -NCO) contenant les entités chimiques porteuses de groupements terminaux isocyanates ; et
- l'autre (appelé composant -OH) contenant les entités chimiques porteuses de groupements terminaux hydroxyles.

Toutefois, ces compositions adhésives à base de polyuréthane présentent en général l'inconvénient de mettre en oeuvre un composant -NCO comprenant des teneurs résiduelles importantes en monomères diisocyanates provenant de la réaction de synthèse du prépolymère de polyuréthane porteur de groupements NCO (ou à terminaisons NCO). Ces monomères diisocyanates résiduels sont en effet susceptibles de conduire à un certain nombre d'effets indésirables. On entend par « monomère diisocyanate », un composé hydrocarboné de faible masse molaire (inférieure à 300 g/mol) possédant deux groupes isocyanate. En particulier, on entend par « monomère diisocyanate aromatique », un monomère diisocyanate tel que défini précédemment, dans lequel l'un des groupes NCO est relié par une liaison covalente à un atome de carbone faisant parti d'un cycle hydrocarboné aromatique tel qu'un groupe phényle. En particulier, on entend par « monomère diisocyanate aliphatique », un monomère diisocyanate non aromatique ou un monomère diisocyanate dans lequel aucun des groupes NCO n'est relié par une liaison covalente à un atome de carbone faisant parti d'un cycle hydrocarboné aromatique tel qu'un groupe phényle.

La présence de teneurs en monomères résiduels élevées est dangereuse pour la manipulation et la santé des utilisateurs, ce qui implique des restrictions d'usage et la mise en oeuvre de systèmes de ventilation. La mise en place de ces systèmes n'est pas toujours possible, par exemple dans le cadre du collage ou réparation de pièces automobiles (garagistes), ou bien dans la construction. De plus, afin de tenir compte des effets indésirables liés à la présence de ces monomères diisocyanates, la règlementation impose pour certains types de produits un étiquetage particulier du produit, dès lors que la concentration en monomères diisocyanates aromatiques dépasse 0,1% en poids du poids du produit et/ou dès lors que la concentration en monomères diisocyanates aliphatiques dépasse 0,5% en poids du poids du produit, voire même 0,1% en poids du poids du produit.

WO2018/011491 décrit une composition adhésive bicomposante à base de polyuréthane comprenant une teneur réduite en monomère isocyanate résiduel, pour utilisation dans les emballages flexibles alimentaires.

EP1619215 et WO2017/109382 décrivent des compositions monocomposantes à faible viscosité à base de polyuréthanes.

Il est donc souhaitable de mettre à disposition du public des compositions adhésives bicomposantes dans lequel le composant -NCO, à base de polyuréthane à terminaisons NCO, est substantiellement voire totalement exempte de monomères diisocyanates résiduels, et de préférence dans lequel la teneur en monomères diisocyanates résiduels est inférieure ou égale aux seuils réglementaires susmentionnés.

Il existe notamment un besoin de fournir de nouvelles compositions à base de polyuréthane pour des collages semi-structuraux ou structuraux, présentant un taux de monomères résiduels faibles voire très faibles (< 0,1% en poids du poids du produit).

### DESCRIPTION DE L'INVENTION

Dans la présente demande, en l'absence d'indication contraire :
- les quantités exprimées sous la forme de pourcentage correspondent à des pourcentages poids/poids ;
- les masses moléculaires moyennes en nombre (Mn), exprimées en gramme par mole (g/mol) sont déterminées par calcul à l'aide de la fonctionnalité (nombre de groupe NCO ou OH par mole) de l'entité considérée (polymère de polyuréthane à terminaisons NCO, diol ou polyol) et de l'analyse de la teneur en groupes terminaux (NCO ou OH) exprimée en milliéquivalent par gramme (méq/g) ;
- l'indice hydroxyle d'un polyol (noté IOH) représente le nombre de fonctions hydroxyles par gramme de polyol et est exprimé dans le texte de la présente demande sous la forme du nombre équivalent de milligrammes de potasse (KOH) utilisés dans le dosage des fonctions hydroxyles par gramme de produit. L'IOH peut être mesuré expérimentalement par exemple selon la norme ISO 14900 :2001. Dans le cas d'un mélange de polyols, l'IOH peut également être calculé à partir des IOH connus de chacun des polyols et de leur teneur pondérale respective dans ledit mélange ;
- l'indice d'amine d'une amine représente le nombre de fonctions amine par gramme de polyamine et est exprimé dans le texte de la présente demande sous la forme du nombre équivalent de milligrammes de potasse (KOH) utilisés dans le dosage des fonctions amines par gramme de produit. Cet indice peut être mesuré expérimentalement par potentiométrie. Dans le cas d'un mélange de polyamines, l'indice d'amine peut également être mesuré expérimentalement ou calculé à partir des indices d'amine de chacune des polyamines et de leur teneur pondérale respective dans ledit mélange ;
- par « monomère diisocyanate dissymétrique », on entend un monomère diisocyanate dont les groupes isocyanate possèdent des réactivités différentes au regard d'un diol donné. En règle générale, un tel monomère ne possède pas d'axe, plan ou centre de symétrie ;
- la teneur en monomère diisocyanate est mesurée selon la méthode d'analyse suivante reposant sur la réaction spécifique du groupe isocyanate NCO avec une amine (1-(2-méthoxyphényl)pipérazine ou PPZ) pour former des dérivés stables d'urée. Ces dérivés sont obtenus lors de la préparation de l'échantillon d'adhésif par dilution/solubilisation de cet échantillon à l'aide d'une solution d'acétonitrile à 0,02 mol/L de PPZ. Les dérivés de PZZ formés à partir des isocyanates contenus dans l'échantillon à analyser sont ensuite dosés par un système de Chromatographie Liquide Haute Performance (CLHP) à phase inversée en C18 avec un gradient de phase mobile comprenant un mélange d'eau et d'acétonitrile tamponné à l'aide d'une solution aqueuse de tétrabutylammonium bisulfate à 0,2% en poids, à un pH allant de 4 à 5, muni d'un détecteur Ultra-Violet (UV) fonctionnant à 254 nm. Ces composés sont identifiés et quantifiés en comparant leur temps de rétention et leur surface de pics chromatographiques avec ceux des dérivés PPZ étalons obtenus par réaction d'un monomère diisocyanate de nature et concentration connue ;
- la viscosité est mesurée à l'aide d'un viscosimètre Brookfield selon la norme ISO 2555. De préférence, la mesure réalisée à 23°C peut se faire à l'aide d'un viscosimètre Brookfield RVT, d'une aiguille adaptée au domaine de viscosité et à une vitesse de rotation de 20 tours par minute (tr/mn)

### A. Composition

La présente invention concerne une composition comprenant :
- un composant -NCO comprenant :
   A) au moins un polyuréthane comportant au moins deux groupements terminaux NCO obtenu par réaction de polyaddition :
      - d'au moins un diisocyanate dissymétrique ; et
      - d'au moins un polyol,
   B) au moins un polyisocyanate comprenant au moins trois fonctions isocyanate -NCO, choisi dans le groupe constitué des biurets, des isocyanurates, des adduits de diisocyanates et de triols, et de leurs mélanges ;
- un composant -OH comprenant :
   - au moins un polyol ;
   - une teneur totale en charge(s) supérieure ou égale à 35% en poids, par rapport au poids total dudit composant -OH
   dans laquelle le ratio volumique composant -OH/composant -NCO va de 1/3 à 3/1.

### Composant -OH

### Polyol(s)

Le(s) polyol(s) utilisé(s) selon l'invention peu(ven)t être choisi(s) parmi ceux dont la masse moléculaire moyenne en nombre (Mn) va de 50 à 50 000 g/mol, de préférence de 100 à 20 000 g/mol, préférentiellement de 500 à 20 000 g/mol, et avantageusement de 1 000 à 5 000 g/mol.

Leur fonctionnalité hydroxyle peut aller de 2 à 6, préférentiellement de 2 à 3. La fonctionnalité hydroxyle est le nombre moyen de fonction hydroxyle par mole de polyol.

Selon un mode de réalisation particulier, le composant-OH comprend :
- au moins un polyol P1 ayant une masse moléculaire moyenne en nombre supérieure ou égale à 1 000 g/mol, de préférence inférieure ou égale à 10 000 g/mol, préférentiellement inférieure ou égale à 5 000 g/mol, avantageusement inférieure ou égale à 3 000 g/mol.
- au moins un polyol P2 ayant une masse moléculaire moyenne en nombre inférieure ou égale à 500 g/mol.

### Polvol(s) P1

Le(s) polyol(s) P1 utilisable(s) peu(ven)t être choisi(s) parmi les polyester polyols, les polyéther polyols, les polyène polyols, les polycarbonate polyols, les poly(éther-carbonate) polyols, et leurs mélanges.

Le(s) polyol(s) P1 utilisable(s) peu(ven)t être choisi(s) parmi les polyols aromatiques, les polyols aliphatiques, les polyols arylaliphatiques et les mélanges de ces composés.

Les polyester polyols peuvent être choisis parmi les polyester diols et les polyester triols, et de préférence parmi les polyester diols.

Parmi les polyester polyols, on peut par exemple citer :
- les polyesters polyols d'origine naturelle tel que l'huile de ricin ;
- les polyesters polyols résultant de la polycondensation :
   - d'un ou plusieurs polyols aliphatiques (linéaires, ramifiés ou cycliques) ou aromatiques tels que par exemple le monoéthylène glycol, le diéthylène glycol, le 1,2-propanediol, le 1,3-propanediol, le 1,4-butanediol, le butènediol, le 1,6-hexanediol, le cyclohexane diméthanol, le tricyclodécane diméthanol, le néopentyl glycol, le cyclohexane diméthanol, le glycérol, le triméthylolpropane, le 1,2,6-hexanetriol, le sucrose, le glucose, le sorbitol, le pentaérythritol, le mannitol, la N-méthyldiéthanolamine, la triéthanolamine, un alcool gras dimère, un alcool gras trimère et leurs mélanges, avec

   - un ou plusieurs acide polycarboxylique ou son dérivé ester ou anhydride tel que l'acide 1,6-hexanedioïque (acide adipique), l'acide dodécanedioïque, l'acide azélaïque, l'acide sébacique, l'acide adipique, l'acide 1,18-octadécanedioïque, l'acide phtalique, l'acide isophtalique, l'acide téréphtalique, l'acide succinique, un acide gras dimère, un acide gras trimère et les mélanges de ces acides, un anhydride insaturé tel que par exemple l'anhydride maléique ou phtalique, ou une lactone telle que par exemple la caprolactone.
- les estolides polyols résultant de la polycondensation d'un ou plusieurs hydroxyacides, tel que l'acide ricinoléïque, sur un diol (on peut par exemple citer les « POLYCIN^{®} D-1000 » et « POLYCIN^{®} D-2000 » disponibles chez VERTELLUS).

Les polyester polyols suscités peuvent être préparés de manière conventionnelle, et sont pour la plupart disponibles commercialement.

Parmi les polyesters polyols, on peut par exemple citer les produits suivants de fonctionnalité hydroxyle égale à 2 :
- le «TONE^{®} 0240 » (commercialisé par UNION CARBIDE) qui est une polycaprolactone de masse moléculaire moyenne en nombre d'environ 2 000 g/mol, et un point de fusion de 50°C environ,
- le « DYNACOLL^{®} 7381 » (comercialisé par EVONIK) de masse moléculaire moyenne en nombre d'environ 3 500 g/mol, et ayant un point de fusion de 65°C environ,
- le « DYNACOLL^{®} 7360 » (commercialisé par EVONIK) qui résulte de la condensation de l'acide adipique avec l'hexanediol, et a une masse moléculaire moyenne en nombre d'environ 3 500 g/mol, et un point de fusion de 55°C environ,
- le « DYNACOLL^{®} 7330 » (commercialisé par EVONIK) de masse moléculaire moyenne en nombre d'environ 3 500 g/mol, et ayant un point de fusion de 85°C environ,
- le « DYNACOLL^{®}7363 » (commercialisé par EVONIK) qui résulte également de la condensation de l'acide adipique avec l'hexanediol, et a une masse moléculaire moyenne en nombre d'environ 5 500 g/mol, et un point de fusion de 57°C environ,
- le « DYNACOLL^{®} 7250 » (commercialisé par EVONIK) : polyester polyol ayant une viscosité de 180 Pa.s à 23°C, une masse moléculaire moyenne en nombre Mn égale à 5 500 g/mol, et une T_{g} égale à -50°C,
- le « KURARAY^{®} P-6010 » (commercialisé par KURARAY) : polyester polyol ayant une viscosité de 68 Pa.s à 23°C, une masse moléculaire moyenne en nombre Mn égale à 6 000 g/mol, et une T_{g} égale à -64°C,
- le « KURARAY^{®} P-10010 » (commercialisé par KURARAY) : polyester polyol ayant une viscosité de 687 Pa.s à 23°C, et une masse moléculaire moyenne en nombre Mn égale à 10 000 g/mol,
- le « DEKATOL^{®} 3008 » (commercialisé par la société BOSTIK) de masse molaire moyenne en nombre Mn voisine de 1 060 g/mol et dont l'indice hydroxyle va de 102 à 112 mg KOH/g. Il s'agit d'un produit issu de la condensation d'acide adipique, de diéthylèneglycol et de monoéthylèneglycol.

Le(s) polyéther polyol(s) utilisable(s) selon l'invention est (sont) de préférence choisi(s) parmi les polyoxyalkylène polyols, dont la partie alkylène, linéaire ou ramifiée, comprend de 1 à 4 atomes de carbone, plus préférentiellement de 2 à 3 atomes de carbone.

Plus préférentiellement, le(s) polyéther polyol(s) utilisable(s) selon l'invention est (sont) de préférence choisi(s) parmi les polyoxyalkylène diols ou polyoxyalkylène triols, dont la partie alkylène, linéaire ou ramifiée, comprend de 1 à 4 atomes de carbone, plus préférentiellement de 2 à 3 atomes de carbone.

A titre d'exemple de polyoxyalkylène diols ou triols utilisables selon l'invention, on peut citer :
- les polyoxypropylène diols ou triols (aussi désignés par polypropylène glycol (PPG) diols ou triols) ayant une masse moléculaire moyenne en nombre (Mn) allant de 1 000 g/mol à 12 000 g/mol ;
- les polyoxyéthylène diols ou triols (aussi désignés par polyéthylène glycol (PEG) diols ou triols) ayant une masse moléculaire moyenne en nombre (Mn) allant de 1 000 g/mol à 12 000 g/mol;
- et leurs mélanges.

Les polyéther polyols suscités peuvent être préparés de manière conventionnelle, et sont largement disponibles dans le commerce. Ils peuvent être obtenus par polymérisation de l'oxyde d'alkylène correspondant en présence d'un catalyseur basique (par exemple de la potasse) ou d'un catalyseur à base d'un double complexe métal-cyanure.

A titre d'exemple de polyéther diol, on peut citer le polyoxypropylène diol commercialisé sous la dénomination « VORANOL^{®} P 1010 » par la société DOW de masse moléculaire moyenne en nombre (Mn) voisine de 1 020 g/mol et dont l'indice hydroxyle est d'environ 110 mg KOH/g, ou le « VORANOL^{®} P2000 » commercialisé par la société DOW de masse moléculaire moyenne en nombre voisine de 2 040 g/mol et dont l'indice hydroxyle est d'environ 55 mg KOH/g.

Le(s) polyène polyol(s) utilisable(s) selon l'invention peu(ven)t être choisi(s) de préférence parmi les polyènes comportant des groupes hydroxyles terminaux, et leurs dérivés correspondants hydrogénés ou époxydés.

De préférence, le(s) polyène polyol(s) utilisable(s) selon l'invention est (sont) choisi(s) parmi les polybutadiènes comportant des groupes hydroxyles terminaux, éventuellement hydrogénés ou époxydés. Préférentiellement, le(s) polyène polyol(s) utilisable(s) selon l'invention est (sont) choisi(s) parmi les homopolymères et copolymères de butadiène comportant des groupes hydroxyles terminaux, éventuellement hydrogénés ou époxydés.

Dans le cadre de l'invention, et sauf mention contraire, on entend par « groupes hydroxyles terminaux » d'un polyène polyol, les groupes hydroxyles situés aux extrémités de la chaîne principale du polyène polyol.

Les dérivés hydrogénés mentionnés ci-dessus peuvent être obtenus par hydrogénation totale ou partielle des doubles liaisons d'un polydiène comportant des groupes hydroxyles terminaux, et sont donc saturé(s) ou insaturé(s).

Les dérivés époxydés mentionnés ci-dessus peuvent être obtenus par époxydation chémiosélective des doubles liaisons de la chaîne principale d'un polyène comportant des groupes hydroxyles terminaux, et comportent donc au moins un groupe époxy dans sa chaîne principale.

A titre d'exemples de polyène polyols, on peut citer les homopolymères de butadiène, saturé ou insaturé, comprenant des groupes hydroxyles terminaux, éventuellement époxydés, tels que par exemple ceux commercialisés sous la dénomination « POLY BD^{®} ou KRASOL^{®} » par la société CRAY VALLEY.

Les polycarbonate polyols peuvent être choisis parmi les polycarbonate diols ou triols. A titre d'exemple de polycarbonate diol, on peut citer :
- le « CONVERGE^{®} POLYOL 212-20 » commercialisés par la société NOVOMER de masse moléculaire en nombre (Mₙ) égales à 2 000 g/mol dont l'indice hydroxyle est de 56 mg KOH/g,
- les « POLYOL C1090, C-2090 et C-3090 » commercialisés par KURARAY ayant une masse moléculaire en nombre (Mₙ) allant de 1 000 à 3 000 g/mol et un indice hydroxyle allant de 35 à 118 mg KOH/g.

### Polvol(s) P2

De préférence, le(s) polyol(s) P2 est(sont) choisi(s) parmi les polyéther polyols, les polyester polyols, et leurs mélanges, de préférence parmi les polyéther polyols.

De préférence, le composant-OH comprend au moins deux polyols P2, dont au moins un polyéther triol et au moins un polyéther diol.

Le(s) polyol(s) P2 utilisable(s) peu(ven)t être choisi(s) parmi les polyols aromatiques, les polyols aliphatiques, les polyols arylaliphatiques et les mélanges de ces composés.

Selon un mode de réalisation préféré, le composant -OH comprend :
- au moins un diol P2 ayant de préférence une masse moléculaire moyenne en nombre allant de 50 à 500 g/mol, de préférence de 50 à 350 g/mol, préférentiellement de 80 à 200 g/mol, ledit diol P2 étant de préférence choisi parmi les polyéther diols ; et
- au moins un triol P2 ayant de préférence une masse moléculaire moyenne en nombre allant de 200 à 500 g/mol, de préférence de 300 à 500 g/mol, préférentiellement de 350 à 450 g/mol, ledit triol P2 étant de préférence choisi parmi les polyéther triols.

Le(s) diol(s) P2 est(sont) en particulier choisi(s) dans le groupe constitué du diéthylène glycol, du 2-éthyl-1,3-hexanediol, du néopentyl glycol, du 3-méthyl-1,5-pentanediol, et de leurs mélanges.

A titre de triol P2, on peut par exemple citer le VORANOL^{®} CP450 commercialisé par la société DOW, qui est un polypropylène glycol ayant une fonctionnalité égale à 3, et un IOH allant de 370 à 396 mg KOH/g.

Le composant -OH est de préférence tel que :
- la teneur totale en polyol(s) P1 peut aller de 5% à 30% en poids, de préférence de 5% à 25% en poids, préférentiellement de 10% à 20% en poids par rapport au poids total du composant -OH ; et/ou
- la teneur totale en polyol(s) P2 peut aller de 5% à 60% en poids, de préférence de 5% à 50% en poids, préférentiellement de 5% à 40% en poids par rapport au poids total du composant -OH.

### Charge(s)

Le composant -OH comprend une teneur totale en charge(s) supérieure ou égale à 35% en poids, de préférence supérieure ou égale à 40% en poids, préférentiellement supérieure ou égale à 45% en poids, et avantageusement supérieure ou égale à 50% en poids par rapport au poids total dudit composant -OH.

Selon un mode de réalisation, le composant -OH comprend au moins une charge choisie parmi les charges minérales, les charges organiques, et leurs mélanges.

A titre d'exemple de charge(s) minérale(s) utilisable(s), on peut utiliser n'importe quelle(s) charge(s) minérale(s) habituellement utilisée(s) dans le domaine des adhésifs structuraux ou semi-structuraux. Ces charges se présentent typiquement sous la forme de particules de géométrie diverse. Elles peuvent être par exemples sphériques, fibreuses, ou présenter une forme irrégulière.

De préférence, la(les) charge(s) est(sont) choisie(s) dans le groupe constitué de l'argile, du quartz, des charges carbonatées, du kaolin, du gypse, des argiles, et de leurs mélanges, préférentiellement la(les) charge(s) est(sont) choisie(s) parmi les charges carbonatées, telles que les carbonates de métaux alcalin ou alcalino-terreux, et plus préférentiellement parmi le carbonate de calcium, la craie, et leurs mélanges.

Ces charges peuvent être non traitées ou traitées, par exemple à l'aide d'un acide organique tel que l'acide stéarique, ou d'un mélange d'acides organiques constitué majoritairement d'acide stéarique.

La craie est typiquement extrait de gisements naturels, contrairement à du carbonate de calcium synthétique.

On peut utiliser également des microsphères creuses minérales telles que des microsphères creuses de verre, et plus particulièrement celles en borosilicate de sodium et de calcium ou en aluminosilicate.

A titre d'exemple de charge(s) organique(s) utilisable(s), on peut utiliser n'importe quelle(s) charge(s) organique(s) et notamment polymérique(s) habituellement utilisée(s) dans le domaine des compositions adhésives.

On peut utiliser par exemple du polychlorure de vinyle (PVC), des polyoléfines, du caoutchouc, de l'éthylène vinyl acétate (EVA), des fibres aramides telles que le Kevlar^{®}.

On peut utiliser également des microsphères creuses en polymère thermoplastique expansibles ou non expansibles. On peut notamment citer des microsphères creuses en chlorure de vinylidène/acrylonitrile.

La taille moyenne de particule de la (des) charge(s) utilisable(s) est de préférence inférieure ou égale à 50 microns, préférentiellement inférieure ou égale à 30 microns, plus préférentiellement inférieure ou égale à 20 microns, avantageusement inférieure ou égale à 10 microns, et en particulier inférieure ou égale à 5 microns.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

Selon un mode de réalisation préféré, le composant -OH comprend au moins une charge minérale, de préférence au moins deux charges minérales, ladite(lesdites) charge(s) minérale(s) étant préférentiellement choisie(s) parmi les carbonates de métaux alcalin ou alcalino-terreux tels que par exemple la craie, le carbonate de calcium ou leurs mélanges.

De préférence, le composant -OH comprend au moins une charge choisie parmi les carbonates de calcium, et en particulier les carbonates de calcium hydrophobés, ayant de préférence un D50 inférieur ou égal à 30 microns, avantageusement inférieur ou égal à 10 microns.

Selon un mode de réalisation, le composant -OH comprend :
- au moins 35% en poids, de préférence au moins 40% en poids, préférentiellement au moins 45% en poids, et avantageusement au moins 50% en poids de charge(s) choisie(s) parmi les carbonates de calcium, de préférence les carbonates de calcium hydrophobés, ayant de préférence un D50 inférieur ou égal à 30 microns, avantageusement inférieur ou égal à 10 microns ; et
- de 0% à 70%, de préférence de 0% à 60% en poids de craie, préférentiellement de 40% à 60% en poids de craie ;
les pourcentages en poids étant par rapport au poids total du composant -OH.

Parmi les carbonates de métaux alcalins ou alcalino-terreux, on peut par exemple citer la craie BL 200 TB commercialisé OMYA (DV50 = 9 microns), le SOCAL 312 commercialisé par SOLVAY (carbonate de calcium hydrophobé avec un DV50 de 1 micron), ou le OMYA BSH commercialisé par OMYA (carbonate de calcium hydrophobé).

### Autres composants

Selon un mode de réalisation, le composant -OH comprend au moins une polyamine comprenant au moins une fonction amine primaire ou secondaire.

La polyamine peut avoir une masse moléculaire moyenne en nombre allant de 60 g/mol à 5 000 g/mol, de préférence de 100 g/mol à 3 000 g/mol, préférentiellement de 400 g/mol à 2 000 g/mol, et avantageusement de 400 g/mol à 1 000 g/mol.

Selon un mode de réalisation, la polyamine répond à l'une des formules (I-1), (I-2) ou (I-3) ci-dessous :

H₂N-CH₂-R⁴-CH₂-NH₂ (I-1)

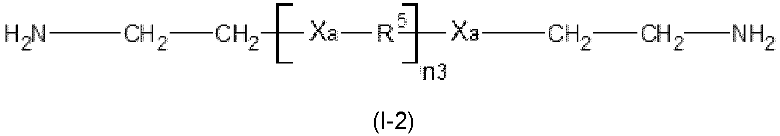

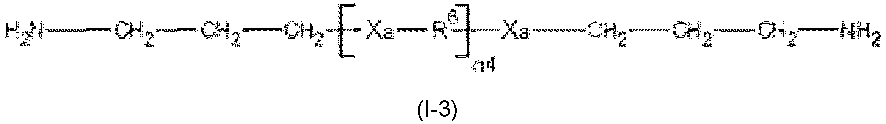

dans lesquelles :
- R⁴ est une liaison, un radical divalent alkylène linéaire ou ramifié, ou un radical divalent arylène, comprenant de 1 à 18 atomes de carbones;
- R⁵ représente un radical divalent alkylène linéaire ou ramifié comprenant de 2 à 12 atomes de carbone, préférentiellement éthylène ou propylène,
- R⁶ représente un radical divalent alkylène linéaire ou ramifié comprenant de 2 à 10 atomes de carbone, préférentiellement éthylène ou propylène,
- Xₐ = O, S, NR⁷ dans lequel R⁷ représente H ou un groupe alkyle linéaire ou ramifié, saturé ou insaturé, comprenant de 1 à 10 atomes de carbone, préférentiellement 1 à 4 atomes de carbones, X représentant de préférence O ;
- n₃ est un nombre entier allant de 0 à 4, et avantageusement étant égal à 1 ou 2 ;
- n₄ est un nombre entier allant de 0 à 2, et avantageusement étant égal à 1.

De préférence, la polyamine est choisie parmi la diéthylène diamine (EDA) : H₂N-CH₂-CH₂-NH₂, la diéthylènetriamine (DETA) : H₂N-CH₂-CH₂-NH-CH₂-CH₂-NH₂, la 1,10-décanediamine : H₂N-(CH₂)₁₀-NH₂, la 1,12 dodécanediamine : H₂N-(CH₂)₁₂-NH₂, la 1,6-hexamétylènediamine (HMDA), les polyétherdiamines de formules H₂N-CH₂-CH₂-O-CH₂-CH₂-O-CH₂-CH₂-NH₂ et H₂N-CH₂-CH₂-CH₂-O-CH₂-CH₂-O-CH₂-CH₂-CH₂-NH₂ (disponible par exemple respectivement sous les dénominations commerciales « JEFFAMINE^{®} EDR 148 » et « JEFFAMINE^{®} EDR 176 » auprès de la société HUNTSMAN).

Selon un mode de réalisation, la polyamine est choisie dans le groupe constitué des polyétheramines, des polyamidoamines, des amines grasses dimères ou trimères, des polyéthylèneimines (PEI), des polyéthylèneimines dendrimères, des polypropylèneimines (PPI), des polypropylèneimines dendrimères, des polyallylamines, des poly(propylèneéthylène)imines, et de leurs mélanges, ladite polyamine ayant de préférence un indice d'amine allant de 20 à 1870 mg KOH/g, de préférence de 50 à 1000 mg KOH/g, préférentiellement de 100 à 800 mg KOH/g, et avantageusement de 180 à 250 mg KOH/g.

Selon un mode de réalisation, la polyamine est choisie parmi les polyétheramines, en particulier choisie parmi :
- les polyétherdiamines telles que par exemple :
   ∘ les polyétherdiamines répondant à la formule ci-dessous : 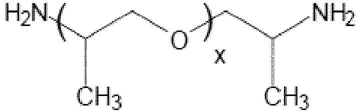 dans laquelle x est un nombre entier, allant de préférence de 1 à 50 (de telles polyétherdiamines sont par exemple commercialisées sous la dénomination JEFFAMINES D-230, D-400, D-2000 et D-4000 par la société HUNTSMAN) ;
   ∘ les polyétherdiamines répondant à la formule ci-dessous : 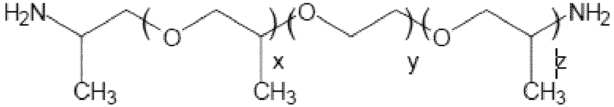 dans laquelle x, y et z sont des nombres entiers, avec x + z allant de préférence de 1 à 6 (de telles polyéther diamines sont commercialisées par exemple sous la dénomination JEFFAMINES HK-511, ED-600, ED-900 et ED-2003 par la société HUNTSMAN) ;
   ∘ les polyétherdiamines répondant à la formule suivante :

      H₂N-X_{b}(-O-X_{b})ₘ₋₁-O-(CH₂-CH₂-CH₂-CH₂-O)ₙ-(X_{b}-O)ₘ₋₁-X_{b}-NH₂

      dans laquelle X_{b} est un groupe alkylène linéaire ou ramifié, comprenant de préférence de 2 à 20 atomes de carbone, de préférence de 2 à 10 atomes de carbone, m est un entier allant de 1 à 20, et n est un entier allant de 1 à 100;
- les polyéthertriamines telles que par exemple celles répondant à la formule ci-dessous : 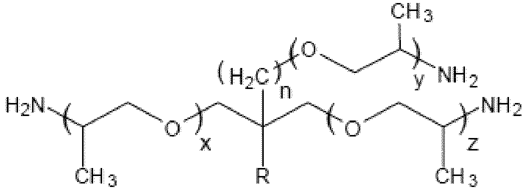 dans laquelle R est un atome d'hydrogène ou un groupe alkyle en C1 à C2, x, y, z et n sont des nombres entiers, de préférence n allant de 0 à 1 et x + y + z allant de 5 à 85 (de telles polyéthertriamines sont commercialisées par exemple sous la dénomination JEFFAMINES T-403, T-3000, et T-5000 par la société HUNTSMAN).

Selon un autre mode de réalisation, la polyamine est choisie parmi les amines grasses dimères et trimères comportant de préférence deux ou trois groupes amines primaire ayant un indice d'amine allant de 184 à 291 mg KOH/g. Ces amines grasses dimères et trimères peuvent être obtenues à partir d'acides gras dimérisés et trimérisés correspondants. A titre d'exemple de telles amines grasses dimères partiellement ou totalement hydrogénées, on peut citer celles répondant aux formules suivantes :

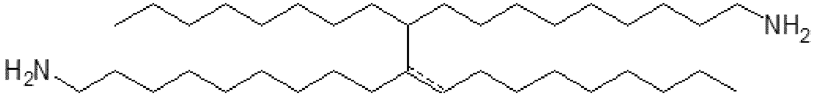

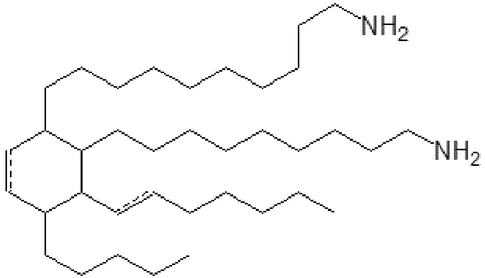

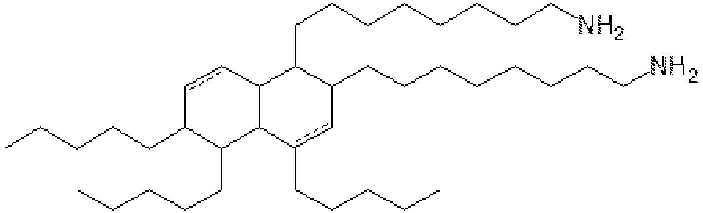

Les acides gras dimères et trimères utilisés pour préparer les amines grasses suscitées peuvent être obtenus par polymérisation à haute température et sous pression d'acides gras insaturés monocarboxyliques (acide monomère), comprenant de 6 à 22 atomes de carbone, de préférence de 12 à 20 atomes de carbone, et proviennent de sources végétales ou animales. On peut citer comme exemple de tels acides gras insaturés, les acides en C₁₈ ayant une ou deux doubles liaisons (respectivement l'acide oléïque ou linoléïque) obtenus à partir de tallol qui est un sous-produit de la fabrication de la pâte à papier. Après polymérisation de ces acides gras insaturés, on obtient notamment un mélange technique contenant en moyenne 30-35 % en poids d'acides gras monocarboxyliques souvent isomérisés par rapport aux acides gras insaturés monocarboxyliques de départ, 60-65 % en poids d'acides dicarboxyliques (acides dimères) comprenant le double du nombre de carbone par rapport aux acides gras insaturés monocarboxyliques de départ et 5-10 % en poids d'acides tricarboxyliques (acides trimères) ayant le triple du nombre de carbone par rapport aux acides gras insaturés monocarboxyliques de départ. Par purification de ce mélange, on obtient notamment les différents grades commerciaux d'acides dimères, monomères ou trimères. Ces acides gras dimères et trimères sont ensuite typiquement soumis à une réaction d'ammoniation réductrice (NH₃/H₂) en présence d'un catalyseur, permettant d'obtenir les amines grasses dimérisées.

De préférence, le composant -OH comprend au moins une polyamine choisie parmi les amines grasses dimères et trimères.

Le composant -OH peut comprendre une teneur totale en polyamine(s) allant de 0,1% à 6% en poids, de préférence de 0,5% à 5% en poids, préférentiellement de 1% à 4% en poids par rapport au poids total dudit composant -OH.

Le composant -OH peut comprendre au moins un additif choisi dans le groupe constitué des plastifiants, des catalyseurs, des solvants, des pigments, des promoteurs d'adhérence, des absorbeurs d'humidité, des stabilisants UV (ou antioxydants), des colorants, et de leurs mélanges.

Selon un mode de réalisation, le composant -OH comprend au moins un catalyseur. Il peut s'agir de tout type de catalyseur utilisé dans ce domaine.

De préférence, le composant -OH comprend au moins un catalyseur choisi dans le groupe constitué :
- des catalyseurs organo-métalliques, de préférence à l'exception des catalyseurs à base d'étain ;
- des amines tertiaires ; et
- de leurs mélanges.

Dans le cadre de l'invention, on entend par « catalyseurs organo-métalliques à l'exception des catalyseurs à base d'étain », des catalyseurs organo-métalliques ne comprenant pas d'étain.

Il peut s'agir d'un mélange de catalyseurs d'une même famille (par exemple un mélange de plusieurs amines tertiaires ou un mélange de plusieurs composés organométalliques comprenant différents atomes métalliques), ou un mélange de catalyseurs de différentes familles (par exemple un mélange d'une amine tertiaire et d'un composé organométallique).

Dans le cadre de l'invention, on entend par « catalyseurs organo-métalliques », des catalyseurs comprenant un radical organique et au moins un métal.

Dans le cadre de l'invention, on entend par « radical organique », un radical comprenant au moins un atome de carbone.

Les composés organo-métalliques peuvent comprendre les composés organométalliques (composés comprenant au moins une liaison covalente métal-carbone), les alcoolates métalliques, les carboxylates métalliques, et les complexes de coordination métalliques avec un(des) ligand(s) organique(s).

A titre d'exemple de ligand organique, on peut citer l'acétylacétonate.

L'atome métallique des composés organo-métalliques peut être tout atome métallique connu de l'homme du métier, de préférence à l'exception de l'étain, et peut en particulier être choisi parmi l'aluminium, le manganèse, l'argent, le cuivre, l'or, le platine, le palladium, le ruthénium, le rhodium, le molybdène, le zinc, le cobalt, le fer, le nickel, le bismuth, le titane, ou le zirconium. De préférence, l'atome métallique des composés organo-métalliques est choisi parmi l'aluminium, le zinc, le fer, le bismuth, le titane, l'or et le zirconium.

Les catalyseurs organo-métalliques peuvent comprendre plusieurs atomes métalliques, tels que par exemple du bismuth et du zinc.

De préférence, les catalyseurs organo-métalliques sont des catalyseurs à base de bismuth et/ou zinc.

Dans le cadre de l'invention, on entend par « catalyseur à base de bismuth », un catalyseur comprenant du bismuth. Un tel catalyseur peut donc comprendre d'autres atomes métalliques en plus du bismuth, comme par exemple du zinc.

En particulier, les catalyseurs organo-métalliques, et notamment les catalyseurs à base de bismuth, comprennent exclusivement du bismuth comme atome métallique (catalyseurs de bismuth).

Les composés organométalliques (composés comprenant au moins une liaison covalente métal-carbone) peuvent être des carboxylates de composés organométalliques.

Les alcoolates métalliques peuvent être choisis dans le groupe constitué du tétrabutanolate de titane, du tétraisopropylate de titane, du tétrabutanolate de zirconium, du tétratisopropylate de zirconium, du phénolate de bismuth, et de leurs mélanges.

Les carboxylates métalliques peuvent être ceux dans lesquels l'acide carboxylique contient de 2 à 20 atomes de carbones, de préférence de 4 à 14 atomes de carbone. On peut par exemple citer à titre d'acides carboxyliques, l'acide butyrique, l'acide isobutyrique, l'acide caproïque, l'acide caprylique, l'acide 2-éthylhexanoïque, l'acide caprique, l'acide laurique, l'acide myristique, l'acide palmitique, l'acide stéarique, l'acide iso-stéarique, l'acide abiétique, l'acide néodécanoïque, l'acide 2,2,3,5-tétraméthylhexanoïque, l'acide 2,4-diméthyl-2-isopropylpentanoïque, l'acide 2,5-diméthyl-2-ethylhexanoïque, l'acide 2,2-diméthyloctanoïque, l'acide 2,2-diéthylhexanoïque, et l'acide arachidique.

Les carboxylates métalliques peuvent être des mono-carboxylates, des dicarboxylates, des tricarboxylates, ou leurs mélanges.

Les carboxylates métalliques peuvent être choisis dans le groupe constitué des carboxylates à base de zinc, des carboxylates à base de bismuth, des carboxylates à base de bismuth et de zinc, et de leurs mélanges, les carboxylates métalliques étant en particulier choisis dans le groupe constitué des carboxylates de zinc, des carboxylates de bismuth, des carboxylates de bismuth et de zinc, et de leurs mélanges.

Parmi les carboxylates de bismuth, on peut par exemple citer le BORCHI^{®} KAT 320 (numéro CAS : 67874-71-9, 2-éthyl hexanoate de bismuth), le BORCHI^{®} KAT 315 (numéro CAS : 34364-26-6, néodécanoate de bismuth) disponibles chez BORCHERS, le KKAT XK-651 disponible chez KING INDUSTRIES, le KK KKAT XC-B221 disponible chez KING INDUSTRIES, et le COSCAT 83 (néodécanoate de bismuth, acide néodécanoïque) disponible chez VERTELLUS.

Parmi les carboxylates de zinc, on peut par exemple citer le BORCHI^{®} KAT 0761 (numéro CAS : 27253-29-8, néodécanoate de zinc) disponible chez BORCHERS, le TIB KAT 616 (néodécanoate de zinc) disponible chez TIB CHEMICALS.

De préférence, le catalyseur est choisi parmi les carboxylates métalliques, et plus particulièrement les carboxylates à base de zinc, les carboxylates à base de bismuth, les carboxylates à base de bismuth et de zinc, et leurs mélanges. En particulier, le catalyseur est choisi parmi le 2-éthyl hexanoate de bismuth, le 2-éthyl hexanoate de zinc, le néodécanoate de bismuth, le néodécanoate de zinc, le 2-éthyl hexanoate de zinc et de bismuth, le néodécanoate de bismuth et de zinc, et leurs mélanges.

Les complexes de coordination métalliques avec un(des) ligand(s) organique(s) peuvent être choisis dans le groupe constitué de l'acétylacétonate de zinc, de l'acétylacétonate de titane (par exemple disponible commercialement sous la dénomination TYZOR^{®} AA75 auprès de la société DORF KETAL), du tétraacétylacétonate de titane, du trisacétylacétonate d'aluminium, des chélates d'aluminium tel que par exemple le mono-acétylacetonate bis-(éthylacétoacétate) (par exemple disponible commercialement sous la dénomination K-KAT^{®} 5218 auprès de la société KING INDUSTRIES), du tétraacétylacétonate de zirconium, du diisopropoxybis(éthylacétonato)titane, et de leurs mélanges.

De préférence, les amines tertiaires sont choisies dans le groupe constitué de la triéthylamine, de la tributylamine, de la N,N-diméthylcyclohexylamine, de la diméthylbenzylamine, de la N,N'-diméthyl pipérazine, N,N,N,N-tétraméthyl propane-1,3-diamine, bis(2-dimethylaminoethyl)ether, du 2-diméthylaminoéthyl-3-diméthylaminopropyl éther, de la N-méthyl morpholine, de la N-éthyl morpholine, de la N-méthoxyethyl morpholine, 2,2'-dimorpholinodiéthyl éther (DMDEE), de la bis(2,6-dimethylmorpholinoethyl)ether, de la bis(3,5-dimethylmorpholinoethyl)ether, de la N,N-diméthylphénylamine, de la N,N,N,N-tetramethylbutane-1,3-diamine, de la N,N,N,N-tetramethylpropane-1,3-diamine, de la N,N,N,N-tetramethylhexane-1,6-diamine, du 1-méthyl imidazole, du 2-méthyl-1-vinyl imidazole, du 1-allyl imidazole, du 1-phenyl imidazole, du 1,2,4,5-tétraméthyl imidazole, du pyrimidazole, de la 4-diméthylamino pyridine, de la 4-pyrrolidino pyridine, de la 4-morpholino pyridine, de la 4-méthyl pyridine, du N-decyl-2-méthyl imidazole, du N-dodecyl-2-méthyl imidazole, de la tris(dimethylaminopropyl) hexahydrotriazine, de la tétraméthylguanidine, du 1,8-diazabicyclo[5.4.0]-7-undécène (DBU), du 1,4-diazabicyclo[2.2.2]octane (DABCO), du 1,5-diazabicyclo[4.3.0]non-5-ène (DBN), de la quinuclidine, du bis-diméthylaminométhyl phénol, du 2-(2-diméthylaminoéthoxy)-éthanol, du quinuclidinol, de l'hydroxyméthyl quinuclidinol, et de leurs mélanges.

En particulier, les amines tertiaires sont choisies parmi le 1,8-diazabicyclo[5.4.0]undec-7-ène (DBU), le 1,5-diazabicyclo[4.3.0]non-5-ène (DBN), le 2,2'-dimorpholinodiéthyl éther (DMDEE), le 1,4-diazabicyclo[2.2.2]octane (DABCO), et leurs mélanges.

Selon un mode de réalisation préféré, le composant -OH comprend un catalyseur choisi parmi les catalyseurs organo-métalliques, en particulier parmi les catalyseurs organométallique à base de bismuth et/ou zinc tels que par exemple les carboxylates à base de zinc, des carboxylates à base de bismuth, les carboxylates à base de bismuth et de zinc, ou leurs mélanges, et avantageusement parmi les carboxylates de zinc, les carboxylates de bismuth, les carboxylates de bismuth et de zinc, et leurs mélanges.

Le composant -OH peut comprendre une quantité totale en catalyseur(s) allant de 0,01% à 5% en poids, préférentiellement de 0,05% à 5% en poids, avantageusement de 0,05% à 3% en poids par rapport au poids total du composant-OH.

Selon un mode de réalisation, le composant -OH possède une viscosité mesurée à température ambiante (23°C) allant de 10 à 150 000 mPa.s, de préférence allant de 20 000 à 100 000 mPa.s.

### Composant -NCO

La composition selon l'invention comprend un composant -NCO comprenant :
A) au moins un polyuréthane comportant au moins deux groupements terminaux NCO obtenu par réaction de polyaddition :
   - d'au moins un diisocyanate dissymétrique ; et
   - d'au moins un polyol,
B) au moins un polyisocyanate comprenant au moins trois fonctions isocyanate -NCO, choisi dans le groupe constitué des biurets, des isocyanurates, des adduits de diisocyanates et de triols, et de leurs mélanges ;

### A) Polyuréthane à terminaisons NCO

Le composant -NCO peut comprendre une quantité totale en polyuréthane(s) comportant au moins deux groupements terminaux NCO susmentionné allant de 60% à 95% en poids, de préférence de 60% à 90% en poids, et avantageusement de 65 à 85% en poids par rapport au poids total du composant -NCO.

Le(s) monomère(s) diisocyanate(s) dissymétrique(s) utilisable(s) pour préparer le polyuréthane à terminaisons NCO A) utilisé selon l'invention peu(ven)t être aliphatique(s) ou aromatique(s).

Selon un mode de réalisation, le(s) monomère(s) diisocyanate(s) dissymétrique(s) est(sont) choisi(s) dans le groupe constitué :
- de l'isophorone diisocyanate (IPDI),
- du toluène diisocyanate (TDI), et en particulier du 2,4-toluène diisocyanate ;
- de la forme hydrogénée du TDI, et en particulier de la forme hydrogénée du 2,4-toluène diisocyanate et/ou la forme hydrogénée du 2,6-TDI : 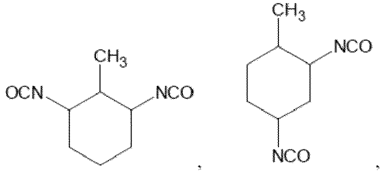
- du 2,4'-diisocyanate de diphénylméthane (2,4'-MDI);
- de la forme hydrogénée du 2,4'-diisocyanate de diphénylméthane (2,4'-MDI) ; et
- de leurs mélanges.

En particulier, il(s) peu(ven)t être utilisé(s) sous la forme d'une composition de diisocyanates comprenant au moins 90% en poids, et de préférence au moins 95% en poids par rapport au poids de ladite composition, d'un monomère diisocyanate dissymétrique.

Plus préférentiellement, le monomère(s) diisocyanate(s) dissymétrique(s) est(sont) choisi(s) parmi l'isomère 2,4'-MDI, l'isomère 2,4-TDI, un mélange d'isomères de MDI à 90% en poids au moins, et de préférence à 95% en poids au moins, d'isomère 2,4'-MDI, ou un mélange d'isomères de TDI à 90% en poids au moins, et de préférence à 95% en poids au moins, d'isomère 2,4-TDI, lesdits pourcentages étant exprimés respectivement par rapport au poids du mélange d'isomères.

Le(s) monomère(s) diisocyanate(s) dissymétrique(s) utilisable(s) pour préparer le polyuréthane à comprenant au moins deux groupements NCO A) susmentionné est (sont) typiquement disponible(s) dans le commerce.

Le(s) polyol(s) utilisable(s) pour préparer le polyuréthane A) susmentionné est (sont) de préférence choisi(s) parmi les polyéther polyols (de préférence polyéther diols), les polyester polyols (de préférence polyester diols), et leurs mélanges.

Les mélanges de polyéther polyol(s) et de polyester polyol(s) peuvent être :
- un mélange de polyéther polyols de natures différentes ;
- un mélange polyester polyols de natures différentes ; ou
- un mélange d'au moins un polyéther polyol et d'au moins un polyester polyol.

De préférence, le polyuréthane A) est préparé à partir d'un mélange d'au moins un polyéther polyol, de préférence polyéther diol, et d'au moins un polyester polyol, de préférence polyester diol.

Le(s) polyol(s) utilisable(s) pour préparer le polyuréthane A) susmentionné peu(ven)t être choisi(s) parmi ceux dont la masse moléculaire moyenne en nombre Mn est inférieure ou égale à 5 000 g/mol, de préférence inférieure ou égale à 4 000 g/mol, avantageusement inférieure ou égale à 3 000 g/mol, et plus préférentiellement ceux dont la masse moléculaire moyenne en nombre Mn va de 400 à 2 500 g/mol.

De préférence, le(s) polyol(s) utilisable(s) pour préparer le polyuréthane A) susmentionné présente(nt) un indice hydroxyle (IOH) allant de 28 à 281 mg KOH/g, de préférence de 100 à 281 mg KOH/g.

Le(s) polyéther polyol(s) utilisable(s) pour préparer le polyuréthane A) susmentionné est (sont) de préférence choisi(s) parmi les polyoxyalkylène-polyols (de préférence polyoxyalkylène-diols), dont la partie alkylène (saturée), linéaire ou ramifiée, comprend de 2 à 4 atomes de carbone, et de préférence de 2 à 3 atomes de carbone.

De préférence, le(s) polyéther polyol(s) utilisable(s) pour préparer le polyuréthane A) susmentionné est (sont) choisi(s) parmi les polyoxypropylène polyols ayant un indice de polydispersité allant de 1 à 1,4, en particulier allant de 1 à 1,3. Cet indice correspond au rapport de la masse moléculaire moyenne en poids Mw à la masse moléculaire moyenne en nombre Mn du polyéther polyol (Ip =Mw/Mn) déterminées par GPC.

De préférence, le(s) polyéther polyol(s) utilisable(s) pour préparer le polyuréthane à A) possède(nt) un IOH allant de 50 à 281 mg KOH/g.

Le(s) polyéther polyol(s) suscité(s) peu(ven)t être préparé(s) de manière conventionnelle, et/ou est (sont) typiquement disponible(s) dans le commerce, comme illustré dans les exemples.

Le(s) polyester polyol(s), de préférence polyester diols, utilisable(s) pour préparer le polyuréthane A) susmentionné peu(ven)t être choisi(s) parmi :
- des polyester polyols issus de la polycondensation d'au moins un diacide carboxylique ou d'au moins un de ses anhydrides ou diesters correspondants, avec au moins un diol,
- des polyester polyols issus d'une polymérisation avec ouverture de cycle d'au moins une lactone cyclique avec au moins diol, tels que les polycaprolactone polyols.

Le(s) diacide(s) carboxylique(s) utilisable(s) pour la synthèse des polyester polyols suscités peuvent être linéaire(s) ou ramifié(s), cyclique(s) ou acyclique(s), saturé(s) ou insaturé(s), aromatique(s) ou aliphatique(s), et comprennent de préférence de 3 à 40 atomes de carbone, et plus préférentiellement de 5 à 10 atomes de carbone. Il peut par exemple s'agir de l'acide adipique, de l'acide phtalique, de l'acide succinique, ou de leurs mélanges.

Le(s) diol(s) utilisable(s) pour la synthèse des polyester polyols suscités peu(ven)t être choisi(s) parmi les polyalkylène diols, les polyoxyalkylène-diols, et les mélanges de ces composés, la partie alkylène (saturée) de ces composés, étant de préférence linéaire ou ramifiée, et comprenant de préférence de 2 à 40 atomes de carbone, et plus préférentiellement de 2 à 8 atomes de carbone. Il peut par exemple s'agir du monoéthylène glycol, du diéthylène glycol, du 1,2-propanediol, du 1,3-propanediol du 1,4-butanediol, du 1,6-hexanediol, ou de leurs mélanges.

Le(s) lactone(s) cyclique(s) utilisable(s) pour la synthèse des polyester polyols suscités comprennent de préférence de 3 à 7 atomes de carbone.

De préférence, le(s) polyester polyol(s) utilisable(s) pour préparer le polyuréthane A) susmentionné possède(nt) un IOH allant de 90 à 281 mg KOH/g, préférentiellement de 90 à 280 mg KOH/g, et avantageusement de 90 à 150 mg KOH/g.

Le(s) polyester polyol(s) utilisable(s) pour préparer le polyuréthane A) susmentionné peu(ven)t être préparé(s) de manière conventionnelle, et/ou est (sont) typiquement disponible(s) dans le commerce comme illustré dans les exemples.

Selon un mode de réalisation, le polyuréthane A) susmentionné est obtenu à partir :
- d'un mélange de polyoxyalkylène-polyols, dont la partie alkylène (saturée), linéaire ou ramifiée, comprend de 2 à 4 atomes de carbone, et de préférence de 2 à 3 atomes de carbone, lesdits polyoxyalkylène-polyols ayant de préférence chacun un IOH allant de 50 à 281 mg KOH/g ;
- d'un mélange de :
   ∘ polyester polyol(s) tel(s) que défini(s) ci-dessus, et possédant notamment un IOH allant de 90 à 281 mg KOH/g, de préférence de 200 à 281 mg KOH/g.; et
   ∘ polyoxyalkylène-diol(s), dont la partie alkylène (saturée), linéaire ou ramifiée, comprend de 2 à 4 atomes de carbone, et de préférence de 2 à 3 atomes de carbone, le(s)dit(s) polyoxyalkylène-diol(s) ayant de préférence un IOH allant de 50 à 281 mg KOH/g, de préférence de 90 à 150 mg KOH/g.

De préférence, les quantités en monomère(s) diisocyanate(s) dissymétriques et en polyol(s) utilisés pour la synthèse du polyuréthane A) susmentionné sont telles que le rapport molaire NCO/OH, noté r₁, va de 1,5 à 2, plus préférentiellement de 1,6 à 1,9.

Ce rapport r₁ correspond au rapport du nombre de groupes -NCO (présents dans la quantité totale de diisocyanate(s) dissymétrique(s) utilisé(s) pour synthétiser le polyuréthane à terminaisons NCO A)) sur le nombre de groupes -OH (présents dans la quantité totale de polyol(s) utilisé(s) pour synthétiser le polyuréthane à terminaisons NCO A)).

Les quantités pondérales de monomère(s) diisocyanate(s) et de polyol(s) à charger dans le réacteur sont notamment déterminées sur la base de ce rapport ainsi que l'indice d'hydroxyle IOH du polyol ou du mélange de polyols mesuré expérimentalement ou calculé à partir des IOH des polyols présents et de leur teneur pondérale respective dans ledit mélange.

Le polyuréthane A) tel que défini précédemment peut être préparé en présence ou non d'au moins un catalyseur de réaction, préférentiellement à une température de réaction T1 inférieure à 95°C et de préférence allant de 65°C à 80°C, et de préférence dans des conditions anhydres.

L'ensemble des conditions d'obtention du polyuréthane A) susdécrites permet avantageusement d'obtenir une concentration en monomère(s) diisocyanate(s) non réagi(s) suffisamment basse en fin de réaction pour que le polyuréthane A) puisse être utilisé directement après sa synthèse dans la préparation du composant -NCO, sans qu'il ne soit nécessaire de le traiter, par exemple par des procédés de purification, distillation ou extraction sélective tels qu'employés dans l'art antérieur, pour éliminer ou réduire l'excès de monomère(s) diisocyanate(s) non réagi(s) présent(s) dans le produit de réaction.

Le composant -NCO obtenu peut ainsi comprendre une teneur en monomère(s) diisocyanate(s) aliphatique(s) inférieure ou égale à 0,5% en poids (de préférence inférieure ou égale à 0,1%) par rapport au poids du composant -NCO, et une teneur en monomère(s) diisocyanate(s) aromatique(s) inférieure ou égale à 0,1% en poids par rapport au poids du composant -NCO.

### B) Polyisocyanate comprenant au moins trois fonctions isocyanate -NCO

Le composant -NCO peut comprendre une teneur totale en polyisocyanate(s) comprenant au moins trois fonctions -NCO B) allant de 5% à 60% en poids, de préférence de 10% à 60% en poids, préférentiellement de 10% à 50% en poids, et avantageusement de 10% à 40% en poids par rapport au poids total du composant -NCO.

Le composant -NCO comprend au moins un polyisocyanate comprenant au moins trois fonctions isocyanate -NCO, ledit polyisocyanate étant choisi dans le groupe constitué des biurets, des isocyanurates, des adduits de diisocyanates et de triols, et de leurs mélanges.

Le polyisocyanate B) selon l'invention peut être choisi parmi un polyisocyanate monomérique, un polyisocyanate oligomérique, un polyisocyanate polymérique, ou leurs mélanges.

Les polyisocyanates oligomériques sont typiquement des mélanges de polyisocyanates ayant des degrés d'oligomérisation différents.

Par exemple, le polyisocyanate B) susmentionné peut être choisi parmi les biurets monomériques, oligomériques et polymériques. En particulier, les biurets sont des mélanges comprenant des biurets triisocyanates (monomériques), des biurets oligomériques, et éventuellement des biurets polymériques.

En particulier, le(s) isocyanurate(s) peuvent être utilisé(s) sous la forme d'un mélange technique de (poly)isocyanurate(s) de pureté supérieure ou égale à 70% en poids en isocyanurate(s) par rapport au poids dudit mélange.

De préférence, le(s) isocyanurate(s) de diisocyanate utilisable(s) selon l'invention répond(ent) à la formule générale (I) suivante : 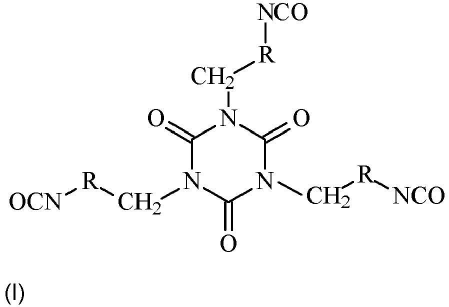 dans laquelle :
R représente un groupe alkylène, linéaire, ramifié ou cyclique, aliphatique ou aromatique, comprenant de 4 à 9 atomes de carbones,
sous réserve que les groupes NCO ne soient pas reliés par une liaison covalente à un atome de carbone faisant parti d'un cycle hydrocarboné aromatique tel qu'un groupe phényle.

A titre d'exemple d'isocyanurate(s) de diisocyanate utilisables selon l'invention, on peut citer :
- l'isocyanurate d'hexaméthylène diisocyanate (HDI) ayant la formule suivante : 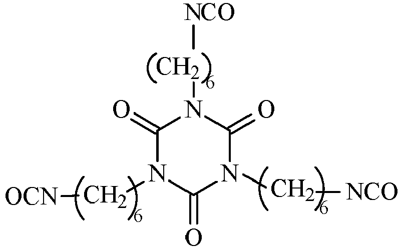
- l'isocyanurate d'isophorone diisocyanate (IPDI) ayant la formule suivante : 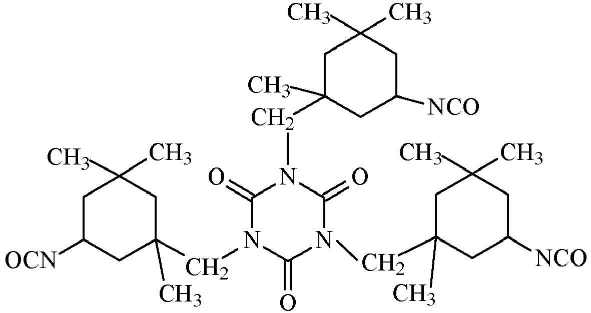
- l'isocyanurate de pentaméthylène diisocyanate (PDI) ayant la formule suivante : 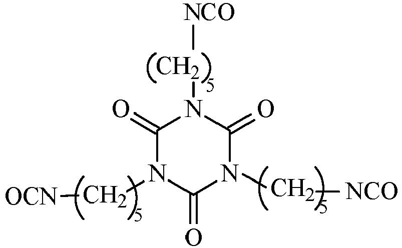
- l'isocyanurate du méta-xylène diisocyanate (m-XDI) ayant la formule suivante : 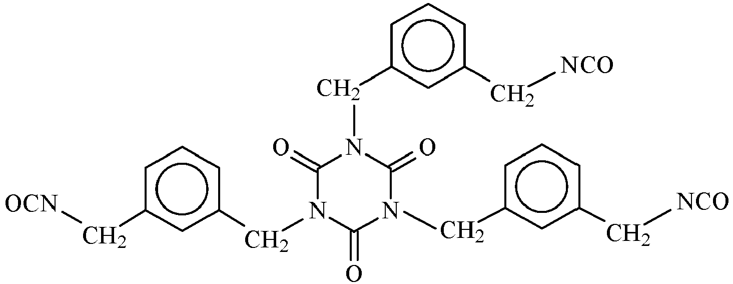
- l'isocyanurate du m-XDI, sous forme hydrogénée ayant la formule suivante :

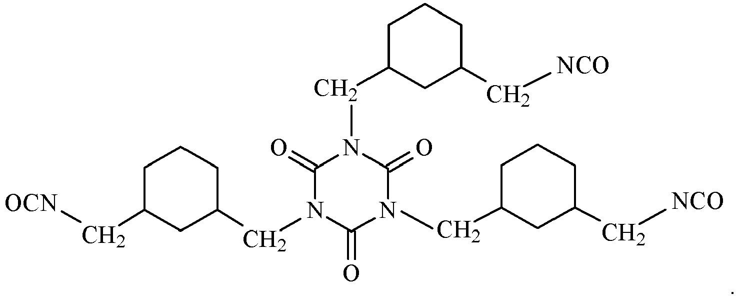

Le(s) diisocyanate(s) utilisable(s) pour préparer les adduits de diisocyanate et triol est (sont) de préférence choisi(s) parmi les monomères de diisocyanates aromatiques ou aliphatiques, et leurs mélanges, et plus préférentiellement les monomères diisocyanates aliphatiques. Le(s) monomère(s) de diisocyanate peu(ven)t être sous forme d'isomère pur ou sous forme de mélange d'isomères.

A titre de triols utilisables pour préparer les adduits de diisocyanate et triol, on peut citer par exemple le Glycérol, Triméthylolméthane (TMM), Triméthyloléthane (TME) et Triméthylolpropane (TMP). De préférence, on utilise le TMP.

A titre d'exemple d'adduits de diisocyanates et de triols utilisables selon l'invention, on peut citer l'adduit de méta-xylène diisocyanate et de triméthylolpropane, tel que représenté ci-dessous.

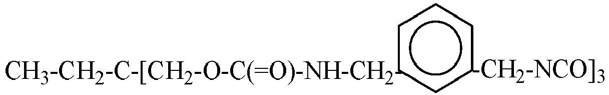

Typiquement, les polyisocyanates oligomériques se présentent sous la forme de mélanges avec des degrés d'oligomérisation et/ou des structures chimiques différentes. De préférence, ces mélanges ont une fonctionnalité moyenne en NCO supérieure ou égale à 3.

Les biurets se présentent notamment sous forme de mélanges, comprenant en majorité un triisocyanate monomérique, et des polyisocyanates oligomériques ayant une fonctionnalité NCO supérieure à 3.

Les biurets peuvent être des biurets monomériques, oligomériques ou polymériques d'hexaméthylène diisocyanate (HDI), d'isophorone diisocyanate (IPDI), de pentaméthylène diisocyanate (PDI), de méta-xylylène diisocyanate (m-XDI) ou de méta-xylylène diisocyanate hydrogéné (m-HXDI).

Selon un mode de réalisation, le composant -NCO comprend B) un mélange de polyisocyanates, lesdits polyisocyanates comprenant chacun au moins trois fonctions NCO, la fonctionnalité moyenne NCO dudit mélange de polyisocyanates étant supérieure ou égale à 3, de préférence supérieure ou égale à 3,5.

Par « fonctionnalité moyenne NCO d'un mélange », on entend le nombre moyen de fonctions NCO par mole de mélange.

Parmi les polyisocyanates B) selon l'invention, on peut par exemple citer :
- les biurets de HDI par exemple commercialisés par BAYER sous les dénominations DESMODUR^{®} N100 et N3200, ou ceux commercialisés par VENCOREX sous les dénominations TOLONATE^{®} HDB et HDB-LV,
- les isocyanurates de HDI, par exemple commercialisés par Bayer sous les dénominations DESMODURr^{®} N3300, N3600 et N3790BA, ou ceux commercialisés par VENCOREX sous les dénominations TOLONATE^{®} HDT, HDT-LV et HDT-LV2.

Selon un mode de réalisation préféré, le polyisocyanate B) susmentionné est choisi parmi les isocyanurates, et en particulier correspond à un isocyanurate de HDI.

Le composant -NCO peut comprendre une teneur massique en groupements NCO allant de 5% à 25%, de préférence de 10% à 20% en masse par rapport à la masse totale dudit composant -NCO.

Le composant -NCO peut être préparé par simple mélange de ses ingrédients à une température inférieure ou égale à 85°C, et de préférence allant de 60°C à 80°C, préférentiellement dans des conditions anhydres.

Selon un mode de réalisation préféré, le composant -NCO selon l'invention comprend :
- de 60% à 95% en poids, de préférence de 65% à 85% en poids de polyuréthane(s) A) tel(s) que défini(s) ci-dessus ; et
- de 10% à 60% en poids, de préférence de 15% à 35% en poids de polyisocyanate(s) comprenant au moins trois fonctions isocyanate -NCO B) tel(s) que défini(s) ci-dessus.

### Additifs

Le composant -NCO peut comprendre au moins un additif choisi dans le groupe constitué des plastifiants, des catalyseurs, des solvants, des pigments, des promoteurs d'adhérence, des absorbeurs d'humidité, des stabilisants UV (ou antioxydants), des colorants, des charges, un agent de rhéologie, et de leurs mélanges.

La teneur totale en additif(s) susmentionné(s) dans le composant -NCO peut aller de 0% à 35% en poids, de préférence de 0% à 20% en poids, avantageusement de 0% à 15% en poids, et encore plus avantageusement de 0% à 10% en poids par rapport au poids total dudit composant -NCO.

De préférence, le composant -NCO ne comprend pas de solvant, ledit solvant pouvant être un solvant organique tel que l'acétate d'éthyle, la méthyl éthyl cétone, le tétrahydrofurane, le méthyl-tétrahydrofurane, ou encore parmi l'ISANE^{®} (à base d'isoparaffines, disponible auprès de la société TOTAL) ou l'EXXOL^{®} D80 (à base d'hydrocarbures aliphatiques, disponible auprès de la société EXXON MOBIL Chemical) ou encore le chlorobenzène, le naphta, l'acétone, le n-heptane, le xylène.

Selon un mode de réalisation, le composant -NCO possède une viscosité mesurée à température ambiante (23°C) allant de 100 à 150 000 mPa.s, de préférence allant de 1000 à 50 000 mPa.s.

De préférence, le composant -NCO susmentionné comprend :
A) au moins un polyuréthane comportant au moins deux groupements terminaux NCO obtenu par réaction de polyaddition :
   - d'au moins un diisocyanate dissymétrique de préférence le toluène diisocyanate (TDI) (sous forme d'un seul isomère ou d'un mélange d'isomères) ;
   - d'un mélange de polyols, et en particulier d'un mélange d'au moins un polyéther diol avec au moins un polyester diol tels que définis précédemment, ou un mélange de deux polyéther diols ;
B) au moins un polyisocyanate comprenant au moins trois fonctions isocyanate -NCO choisi parmi les isocyanurates, les biurets et leurs mélanges ;

la quantité totale en polyuréthane(s) A) susmentionné allant de 60% à 90% en poids du composant -NCO, de préférence de 65% à 85% en poids par rapport au poids total du composant -NCO ; et
la quantité totale en polyisocyanate B) susmentionné allant de 10% à 40% en poids, de préférence de 15% à 35% en poids par rapport au poids total du composant -NCO.

### Composition

De préférence, la composition selon l'invention est une composition adhésive.

Selon un mode de réalisation de l'invention, le ratio volumique composant - OH/composant -NCO, au sein de la composition, va de préférence 1/2 à 2/1, ledit ratio volumique étant avantageusement égal à 1/1 ou à 1/2.

La composition selon l'invention présente avantageusement au moins l'une des propriétés suivantes :
- teneur réduite voire nulle en monomères diisocyanates résiduels, et donc avantageusement non toxique et non dangereuse ;
- conduit, après réticulation, à un joint adhésif présentant des propriétés semistructurales ou structurales.

La composition selon l'invention conduit avantageusement à un joint adhésif ayant :
- un module à la rupture supérieur ou égal à 5 MPa; et/ou
- une élongation à la rupture supérieure ou égale à 80%, de préférence supérieure ou égale à 90%, préférentiellement supérieure ou égale à 100%.

### B. Kit prêt à l'emploi

Un kit prêt à l'emploi est également divulgué, comprenant le composant -OH tel que défini ci-dessus d'une part et le composant -NCO tel que défini ci-dessus d'autre part, conditionnées dans deux compartiments séparés.

En effet, la composition selon l'invention peut se trouver sous une forme bicomposante, par exemple au sein d'un kit prêt à l'emploi, comprenant le composant -NCO d'une part dans un premier compartiment ou fût et le composant -OH d'autre part dans un second compartiment ou fût, dans des proportions adaptées pour un mélange direct des deux composants, par exemple à l'aide d'une pompe doseuse.

Selon un mode divulgué, le kit comprend en outre un ou plusieurs moyens permettant le mélange des composants -NCO et -OH. De préférence, les moyens de mélange sont choisis parmi des pompes doseuses, des mélangeurs statiques de diamètre adapté aux quantités utilisées.

### C. Utilisations

La présente invention concerne également l'utilisation d'une composition telle que définie ci-dessus, comme adhésif, mastic ou revêtement, de préférence comme adhésif.

L'invention concerne également l'utilisation de ladite composition pour la réparation et/ou le collage structural ou semi-structural de matériaux dans le domaine du transport, automobile (voiture, bus ou camion), de la marine, ou de la construction.

La présente invention concerne également un procédé d'assemblage de deux substrats par collage, comprenant :
- l'enduction sur au moins un des deux substrats à assembler d'une composition adhésive obtenue par mélange des composants -OH et -NCO tels que définis précédemment; puis
- la mise en contact effective des deux substrats.

Les substrats appropriés sont, par exemple, des substrats inorganiques tels que le béton, les métaux ou les alliages (comme les alliages d'aluminium, l'acier, les métaux nonferreux et les métaux galvanisés) ; ou bien des substrats organiques comme le bois, des plastiques comme le PVC, le polycarbonate, le PMMA, le polyéthylène, le polypropylène, les polyesters, les résines époxy ; les substrats en métal et les composites revêtus de peinture.

Tous les modes de réalisation décrits ci-dessus peuvent être combinés les uns avec les autres. En particulier, les différents constituants susmentionnés de la composition, et notamment les modes préférés, de la composition peuvent être combinés les uns avec les autres.

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

L'invention est à présent décrite dans les exemples de réalisation suivants qui sont donnés à titre purement illustratif.

### Exemples :

Les ingrédients suivants ont été utilisés :
- VORANOL^{™} P1000 commercialisé par la société DOW est un Polypropylène Glycol (PPG) de fonctionnalité F = 2 ayant un IOH de 112 mg KOH/g.
- VORANOL^{™} P2000 commercialisé par la société DOW est un Polypropylène Glycol (PPG) de fonctionnalité F = 2 ayant un IOH de 55 mg KOH/g soit une masse moléculaire moyenne en nombre (Mn) voisine de 2040 g/mol.
- BORCHI^{®} KAT 315 commercialisé par la société BORCHERS : néodécanoate de Bismuth utilisé comme catalyseur sans étain.
- SCURANATE^{®} T100 commercialisé par la société VENCOREX et correspondant à un mélange d'isomères de TDI comprenant au moins 99% en poids d'isomère 2,4-TDI. Son pourcentage de NCO est de 48,1%.
- VORANOL^{®} P400 commercialisé par la société DOW est un Polypropylène Glycol de fonctionnalité F = 2 ayant un indice d'hydroxyle moyen de 260 mg KOH/g soit une masse moléculaire moyenne en nombre (Mn) voisine de 432 g/mol.
- VORANOL^{®} CP450 commercialisée par la société Dow et correspondant à un polyéther triol (polyoxypropylène triol obtenu à partir de glycérol et d'oxyde de propylène) dont l'indice hydroxyle est de 383 mg KOH/g environ.
- DEKATOL^{®} 3008 fabriqué par la société BOSTIK est un à un polyester polyol de fonctionnalité égale à 2, de masse molaire moyenne en nombre Mn voisine de 1060 g/mol et dont l'indice hydroxyle va de 102 à 112 mg KOH/g. Il s'agit d'un produit issu de la condensation d'acide adipique, de diéthylèneglycol et de monoéthylèneglycol.
- DESMODUR^{®} N3300 commercialisé par la société Covestro et correspondant à un trimère de HDI titrant en moyenne à 21,8% en poids en groupe NCO par rapport au poids dudit produit commercial.
- EHD commercialisé par SIGMA-ALDRICH est le 2-éthyl-1,3-hexanediol ayant un IOH = 767 mg KOH/g).
- DEG commercialisé par SIGMA-ALDRICH est l'éthylène glycol ayant un IOH = 1808 mg KOH/g.
- PRIAMINE^{®} 1071 commercialisée par CRODA est une amine grasse dimère avec un indice d'amine de 205 mg KOH/g.
- SOCAL^{®} 312 commercialisé par SOVAY est un carbonate de calcium précipité ayant un DV50 égal à environ 1 µm.
- OMYA BSH commercialisé par OMYA est du carbonate de calcium hydrophobé dont 42% des particules ont une taille inférieure à 2 microns.

### Exemple 1 : Préparation du composant -NCO :

### 1.A. Préparation du polyuréthane (PU) à terminaisons NCO :

Les polyuréthanes PU à terminaisons NCO utilisés dans les exemples suivants ont été préparés de la même manière à l'aide des différents ingrédients figurant dans le tableau 1. Les quantités de diisocyanate(s) et de polyol(s) utilisés (exprimées en % en poids de produit commercial par rapport au poids de composant -NCO) correspondent à un ratio molaire NCO/OH (r1) de allant de 1,6 à 1,7 environ tel qu'indiqué dans le tableau 1.

Le(s) diisocyanate(s) et le(s) polyol(s) sont mélangés dans un réacteur maintenu sous agitation constante et sous azote, à une température T1 allant de 72°C à 80°C. La température est contrôlée de manière à ne pas dépasser 80°C.

L'ensemble est maintenu en mélange à cette température jusqu'à la consommation complète des fonctions hydroxyle des polyols.

Le taux d'avancement de la réaction est contrôlé en mesurant la teneur en groupe NCO par un dosage de dibutylamine en retour, à l'aide d'acide chlorhydrique selon la norme NF T52-132. La réaction est stoppée lorsque la teneur en groupe NCO mesurée est environ égal à la teneur en groupe NCO souhaitée.

### 1.B. Préparation du composant -NCO par mélange de ses ingrédients :

Dans le même réacteur maintenu sous agitation constante et sous azote, le polyuréthane à terminaisons NCO obtenu est ensuite mélangé aux autres ingrédients constituant le composant -NCO, dans les proportions indiquées dans le tableau 1.

Après homogénéisation du mélange (30 minutes), on mesure la teneur en groupe NCO et la teneur pondérale en monomère diisocyanate, dans le composant -NCO respectivement.

La teneur en groupe NCO dans le composant -NCO, exprimée en pourcentage en poids par rapport au poids du composant -NCO (%NCO), est mesurée selon la norme NF T52-132.

La teneur pondérale en monomère diisocyanate est mesurée par une méthode d'HPLC munie d'un détecteur UV tel que décrit précédemment (phase inversée en C18, phase mobile : solution aqueuse d'acétonitrile, tamponnée avec une solution aqueuse à 0,2% en poids de bisulfate de tétrabutylammonium à pH égal à 4,5, longueur d'onde de détection : 254 nm).

Pour l'ensemble des exemples, la teneur pondérale en monomère diisocyanate présente dans le composant -NCO est inférieure ou égale à 0,1% en poids du poids dudit composant.

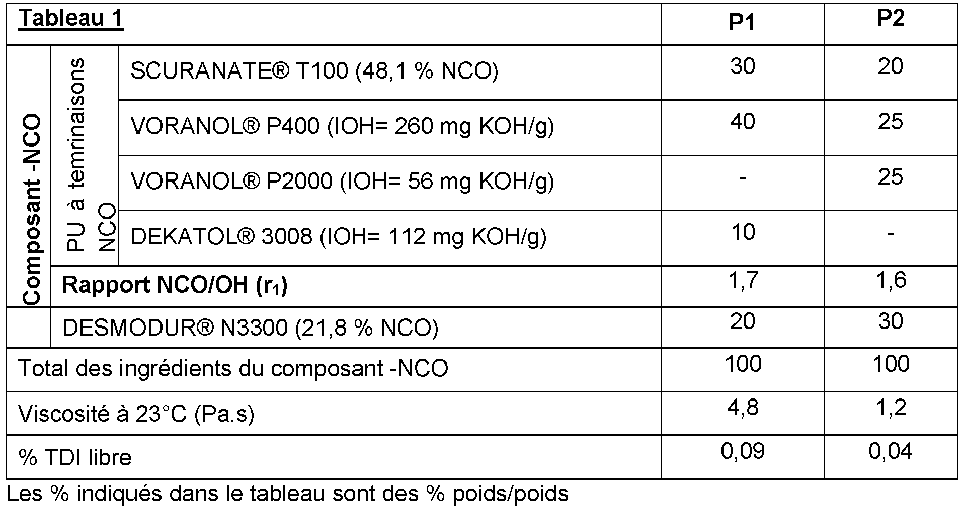

Mesure de la viscosité : La mesure réalisée à 23°C a été faite à l'aide d'un viscosimètre Brookfield RVT, d'une aiguille adaptée au domaine de viscosité et à une vitesse de rotation de 20 tours par minute (tr/mn).

### Exemple 2 : Préparation du composant -OH

Dans un réacteur maintenu sous agitation constante et sous azote, les différents ingrédients constituant le composant -OH sont mélangés dans les proportions indiquées dans le tableau 2 à une température allant de 40°C à 50°C.

Après homogénéisation du mélange (1 heure environ), on mesure la teneur en groupe OH dans le composant -OH, exprimée en milligramme de KOH par gramme de composant - OH (mg KOH/g).

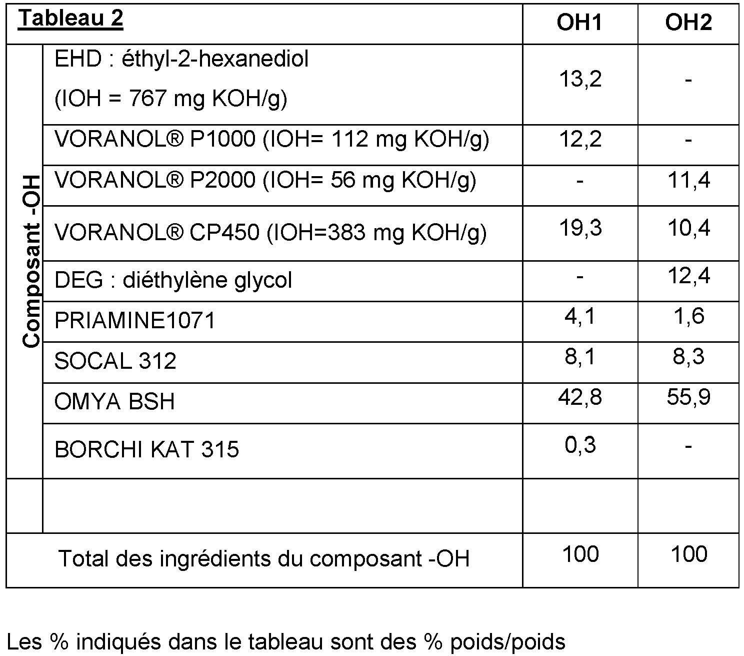

### Exemple 3 : Préparation de la composition adhésive

Le composant -NCO préparé à l'exemple 1 et le composant -OH préparé à l'exemple 2 ont été mélangés, selon les ratios mentionnés ci-dessous dans le tableau 3.

Le mélange est effectué à une température de 50°C environ, selon le ratio volumique donné.

| **Tableau 3** | | **C1** | **C2** |
|---|---|---|---|
| | Composant NCO P1 | x | |
| | Composant NCO P2 | | x |
| | Composant -OH1 | x | |
| | Composant -OH2 | | x |
| | Ratio volumique composant NCO/composant OH | 2/1 | 2/1 |

### Exemple 4 : Evaluation des performances

### Mesure de la résistance et de l'allongement à la rupture par essai de traction :

La mesure de la résistance (contrainte à la rupture) et de l'allongement à la rupture (ou « élongation at break » en anglais) par essai de traction a été effectuée selon le protocole décrit ci-après.

Le principe de la mesure consiste à étirer dans une machine de traction, dont la mâchoire mobile se déplace à une vitesse constante égale à 100 mm/minute, une éprouvette standard constituée de la composition réticulée et à enregistrer, au moment où se produit la rupture de l'éprouvette, la contrainte de traction appliquée (en MPa) ainsi que l'allongement de l'éprouvette (en %). L'éprouvette standard est en forme d'haltère, comme illustré dans la norme internationale ISO 37 de 2011. La partie étroite de l'haltère utilisée a pour longueur 20 mm, pour largeur 4 mm et pour épaisseur 500 µm.

### Tests de collage

Les collages sont réalisés sur des stérigmes en hêtre ou en tôle peinte provenant de la société Rocholl. Sur un stérigme, une zone de 25*12.5mm a été délimitée à l'aide de cales en téflon de 1 mm d'épaisseur une zone de 25*12.5mm. Cette zone a été remplie avec la composition à tester, puis un second stérigme du même matériau a été contrecollé. L'ensemble a été maintenu par une pince et placé en salle climatisée à 23°C et 50% HR (humidité relative) durant une semaine avant traction sur dynamomètre. La traction sur dynamomètre a pour but d'évaluer la force maximale (en Mpa) à exercer sur l'assemblage pour désolidariser celui-ci. Le recours à une machine de traction permet de soumettre un joint à recouvrement simple placé entre deux supports rigides à une contrainte de cisaillement jusqu'à rupture en exerçant une traction sur les supports parallèlement à la surface de l'assemblage et à l'axe principal de l'éprouvette. Le résultat à consigner est la force ou la contrainte à la rupture. La contrainte de cisaillement est appliquée via la mâchoire mobile de la machine de traction avec un déplacement à la vitesse de 100mm/min. Cette méthode de traction est réalisée telle que définie par la norme EN 1465 de 2009.

### Tests de cataplasme humide

Réalisation du cataplasme :
- Découper et peser une bande de coton hydrophile de longueur suffisante pour recouvrir les éprouvettes. Peser la bande de coton. Déposer la première éprouvette sur une extrémité de la bande de coton et la recouvrir de coton.
- Répéter l'opération avec les éprouvettes suivantes, chaque éprouvette est ainsi recouverte de la même quantité de coton.
- Introduire l'ensemble dans un sachet en polyéthylène.
- Ajouter une masse d'eau déionisée égale à 10 fois celle du coton en prenant soin de mouiller uniformément par pressage.
- Chasser l'air en lissant le sachet à la main.
- Fermer le sachet en PE par soudage.
- Pour assurer une parfaite étanchéité, l'ensemble est introduit dans un deuxième sachet qui doit être soudé comme précédemment.

### Conditions d'exposition du cataplasme :

Le cataplasme a été placé durant 7 jours dans une enceinte maintenue à 70°C.

Après 7 jours, les cataplasmes ont été sortis de l'enceinte et, immédiatement, les éprouvettes ont été retirées du sachet et du coton, puis les placées durant deux heures dans une enceinte à -20°C.

A l'issue des 2 heures à -20°C, les éprouvettes ont été placées dans une salle climatisée (23°C et 50% HR) pendant une durée minimale de 2heures et maximale de 4 heures avant de procéder à la traction des éprouvettes sur dynamomètre tel que décrit pour les tests de collage

Les propriétés obtenues des compositions préparées sont résumées dans le tableau 4 suivant :

| | Collage | | | Eprouvette H2 | | Eprouvette H2 (après cataplasme humide) | |
|---|---|---|---|---|---|---|---|
| Composition | Tôle peinte | | | Allongement (%) | Contrainte à la rupture (MPa) | Allongement (%) | Contrainte à la rupture (MPa) |
| | | F max (MPa) | Facies | | | | |
| C1 | | 7,9 | RC | 160 | 5,8 | - | - |
| C2 | | 8,5 | RC | 150 | 6,6 | 93 | 3,3 |

| | | | | | | | |
|---|---|---|---|---|---|---|---|
| RC : rupture cohésive Fmax : force maximale au moment de la rupture du collage | | | | | | | |

Les compositions C1 et C2 ont avantageusement une teneur réduite en monomères diisocyanates résiduels.

De plus, elles conduisent avantageusement à un collage sur tôle peinte menant à une rupture cohésive (RC), ce qui dénote notamment une bonne adhésion dans le domaine automobile. De plus, la force maximale (Fmax) au moment de la rupture est avantageusement élevée (supérieure à 7 MPa).

En outre, les compositions C1 et C2 conduisent avantageusement à un joint adhésif présentant après réticulation de bonnes performances mécaniques :
- allongement à la rupture supérieure ou égale à 150 % ; et
- contrainte à la rupture supérieure à 5 MPa (collage semi-structural).

Le test du cataplasme humide montre que la composition C2 n'a pas perdu plus de 50% de ses propriétés initiales, démontrant avantageusement une bonne tenue de la composition à l'humidité.

## Revendications

1. Composition comprenant :
- un composant -NCO comprenant :
A) au moins un polyuréthane comportant au moins deux groupements terminaux NCO obtenu par réaction de polyaddition :
- d'au moins un diisocyanate dissymétrique ; et
- d'au moins un polyol,
B) au moins un polyisocyanate comprenant au moins trois fonctions isocyanate -NCO, choisi dans le groupe constitué des biurets, des isocyanurates, des adduits de diisocyanates et de triols, et de leurs mélanges ;
- un composant -OH comprenant :
- au moins un polyol ;
- une teneur totale en charge(s) supérieure ou égale à 35% en poids, par rapport au poids total dudit composant -OH,
dans laquelle le ratio volumique composant -OH/composant -NCO va de 1/3 à 3/1

2. Composition selon la revendication 1, dans laquelle le composant-OH comprend :
- au moins un polyol P1 ayant une masse moléculaire moyenne en nombre supérieure ou égale à 1 000 g/mol, déterminée selon la méthode identifiée dans la description, de préférence inférieure ou égale à 10 000 g/mol, préférentiellement inférieure ou égale à 5 000 g/mol, avantageusement inférieure ou égale à 3 000 g/mol.
- au moins un polyol P2 ayant une masse moléculaire moyenne en nombre inférieure ou égale à 500 g/mol.

3. Composition selon l'une quelconque des revendications 1 à 2, dans laquelle le composant -OH comprend au moins deux polyols P2, dont au moins un polyéther triol et au moins un polyéther diol.

4. Composition selon l'une quelconque des revendications 1 à 3, dans laquelle le composant -OH comprend :
- au moins un diol P2 ayant de préférence une masse moléculaire moyenne en nombre allant de 50 à 500 g/mol, déterminée selon la méthode identifiée dans la description, de préférence de 50 à 350 g/mol, préférentiellement de 80 à 200 g/mol, ledit diol P2 étant de préférence choisi parmi les polyéther diols ; et
- au moins un triol P2 ayant de préférence une masse moléculaire moyenne en nombre allant de 200 à 500 g/mol, déterminée selon la méthode identifiée dans la description, de préférence de 300 à 500 g/mol, préférentiellement de 350 à 450 g/mol, ledit triol P2 étant de préférence choisi parmi les polyéther triols.

5. Composition selon l'une quelconque des revendications 1 à 5, dans laquelle :
- la teneur totale en polyol(s) P1 va de 5% à 30% en poids, de préférence de 5% à 25% en poids, préférentiellement de 10% à 20% en poids par rapport au poids total du composant -OH ; et/ou
- la teneur totale en polyol(s) P2 va de 5% à 60% en poids, de préférence de 5% à 50% en poids, préférentiellement de 5% à 40% en poids par rapport au poids total du composant -OH.

6. Composition selon l'une quelconque des revendications 1 à 5, dans laquelle le composant -OH comprend une teneur totale en charge(s) supérieure ou égale à 40% en poids, préférentiellement supérieure ou égale à 45% en poids, et avantageusement supérieure ou égale à 50% en poids par rapport au poids total dudit composant -OH.

7. Composition selon l'une quelconque des revendications 1 à 6, dans laquelle le composant -OH comprend
- au moins 35% en poids, de préférence au moins 40% en poids, préférentiellement au moins 45% en poids, et avantageusement au moins 50% en poids de charge(s) choisie(s) parmi les carbonates de calcium, de préférence les carbonates de calcium hydrophobés, ayant de préférence un D50 inférieur ou égal à 30 microns, avantageusement inférieur ou égal à 10 microns ; et
- de 0% à 70%, de préférence de 0% à 60% en poids de craie, préférentiellement de 40% à 60% en poids de craie ;
les pourcentages en poids étant par rapport au poids total du composant -OH.

8. Composition selon l'une quelconque des revendications 1 à 7, dans laquelle le composant-OH comprend au moins une polyamine comprenant au moins une fonction amine primaire ou secondaire, ladite polyamine ayant de préférence une masse moléculaire moyenne en nombre allant de 50 g/mol à 5 000 g/mol, déterminé selon la méthode identifiée dans la description, de préférence de 100 g/mol à 3 000 g/mol, préférentiellement de 400 g/mol à 2 000 g/mol, et avantageusement de 400 g/mol à 1 000 g/mol.

9. Composition selon la revendication 8, dans laquelle la polyamine est choisie dans le groupe constitué des polyétheramines, des polyamidoamines, des amines grasses dimères ou trimères, des polyéthylèneimines (PEI), des polyéthylèneimines dendrimères, des polypropylèneimines (PPI), des polypropylèneimines dendrimères, des polyallylamines, des poly(propylène-éthylène)imines, et de leurs mélanges, ladite polyamine ayant de préférence un indice d'amine allant de 20 à 1870 mg KOH/g, de préférence de 50 à 1000 mg KOH/g, préférentiellement de 100 à 800 mg KOH/g, et avantageusement de 180 à 250 mg KOH/g. ladite polyamine étant de préférence choisie parmi les amines grasses dimères et trimères comportant de préférence deux ou trois groupes amines primaire ayant un indice d'amine allant de 184 à 291 mg KOH/g.

10. Composition selon la revendication 8, dans laquelle la polyamine répond à l'une des formules (I-1), (I-2) ou (I-3) ci-dessous :
H₂N-CH₂-R⁴-CH₂-NH₂ (I-1) 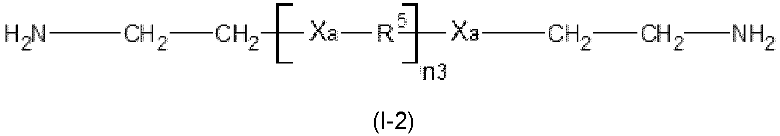 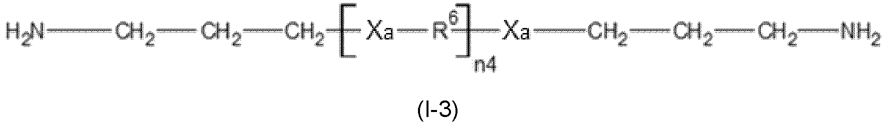
dans lesquelles :
- R⁴ est une liaison, un radical divalent alkylène linéaire ou ramifié, ou un radical divalent arylène, comprenant de 1 à 18 atomes de carbones;
- R⁵ représente un radical divalent alkylène linéaire ou ramifié comprenant de 2 à 12 atomes de carbone, préférentiellement éthylène ou propylène,
- R⁶ représente un radical divalent alkylène linéaire ou ramifié comprenant de 2 à 10 atomes de carbone, préférentiellement éthylène ou propylène,
- Xₐ = O, S, NR⁷ dans lequel R⁷ représente H ou un groupe alkyle linéaire ou ramifié, saturé ou insaturé, comprenant de 1 à 10 atomes de carbone, préférentiellement 1 à 4 atomes de carbones, X représentant de préférence O ;
- n₃ est un nombre entier allant de 0 à 4, et avantageusement étant égal à 1 ou 2 ;
- n₄ est un nombre entier allant de 0 à 2, et avantageusement étant égal à 1.

11. Composition selon l'une quelconque des revendications 1 à 110, dans laquelle polyuréthane A) comportant au moins deux groupements terminaux NCO est obtenu par réaction de polyaddition :
- d'au moins un diisocyanate dissymétrique ; et
- d'au moins un polyol,
le(s)dit(s) monomère(s) diisocyanate(s) dissymétrique(s) est(sont) choisi(s) dans le groupe constitué :
- de l'isophorone diisocyanate IPDI,
- du toluène diisocyanate TDI, et en particulier du 2,4-toluène diisocyanate ;
- de la forme hydrogénée du TDI, et en particulier de la forme hydrogénée du 2,4-toluène diisocyanate et/ou la forme hydrogénée du 2,6-TDI : 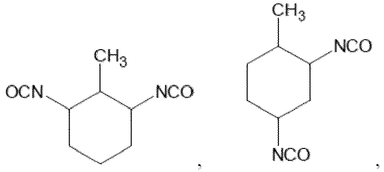
- du 2,4'-diisocyanate de diphénylméthane 2,4'-MDI;
- de la forme hydrogénée du 2,4'-diisocyanate de diphénylméthane 2,4'-MDI ; et
- de leurs mélanges ;
et ledit polyol étant de préférence choisi parmi les polyéther polyols, les polyester polyols , et leurs mélanges.

12. Composition selon l'une quelconque des revendications 1 à 11, dans les quantités en monomère(s) isocyanate(s) et en polyol(s) utilisés pour la synthèse du polyuréthane A) sont telles que le rapport molaire NCO/OH, noté r₁, va de 1,5 à 2, plus préférentiellement de 1,6 à 1,9.

13. Composition selon l'une quelconque des revendications 1 à 12, dans laquelle le composant-NCO comprend B) au moins un polyisocyanate comprenant au moins trois fonction isocyanate NCO choisi dans le groupe des isocyanurates, et en particulier correspondant à un isocyanurate de HDI.

14. Composition selon l'une quelconque des revendications 1 à 13, **caractérisée en ce qu'**il s'agit d'une composition adhésive.

15. Utilisation d'une composition telle que définie dans l'une quelconque des revendications 1 à 14, comme adhésif, mastic ou revêtement, de préférence comme adhésif, de préférence pour la réparation et/ou le collage structural ou semi-structural de matériaux dans le domaine du transport, automobile (voiture, bus ou camion), de la marine, ou de la construction.

## Patentansprüche

1. Zusammensetzung, umfassend:
- eine Komponente -NCO, umfassend:
A) mindestens ein Polyurethan, das mindestens zwei NCO-Endgruppen aufweist, erhalten durch Polyadditionsreaktion:
- mindestens eines unsymmetrischen Diisocyanats; und
- mindestens eines Polyols,
B) mindestens ein Polyisocyanat, das mindestens drei Isocyanat-Funktionen -NCO umfasst und aus der Gruppe gewählt ist, die aus den Biureten, den Isocyanuraten, den Addukten aus Diisocyanaten und Triolen und ihren Mischungen besteht;
- eine Komponente -OH, umfassend:
- mindestens ein Polyol;
- einen Gesamtgehalt an Füllstoff(en) größer als oder gleich 35 Gew.-% bezogen auf das Gesamtgewicht der Komponente -OH,
wobei das Volumenverhältnis Komponente -OH/Komponente - NCO 1/3 bis 3/1 beträgt.

2. Zusammensetzung nach Anspruch 1, in der die Komponente -OH umfasst:
- mindestens ein Polyol P1 mit einer zahlenmittleren Molekularmasse größer als oder gleich 1000 g/mol, bestimmt nach der in der Beschreibung genannten Methode, bevorzugt kleiner als oder gleich 10.000 g/mol, vorzugsweise kleiner als oder gleich 5000 g/mol, vorteilhafterweise kleiner als oder gleich 3000 g/mol,
- mindestens ein Polyol P2 mit einer zahlenmittleren Molekularmasse kleiner als oder gleich 500 g/mol.

3. Zusammensetzung nach einem der Ansprüche 1 bis 2, in der die Komponente -OH mindestens zwei Polyole P2 umfasst, darunter mindestens ein Polyethertriol und mindestens ein Polyetherdiol.

4. Zusammensetzung nach einem der Ansprüche 1 bis 3, in der die Komponente -OH umfasst:
- mindestens ein Diol P2 mit bevorzugt einer zahlenmittleren Molekularmasse von 50 bis 500 g/mol, bestimmt nach der in der Beschreibung genannten Methode, bevorzugt von 50 bis 350 g/mol, vorzugsweise von 80 bis 200 g/mol, wobei das Diol P2 bevorzugt unter den Polyetherdiolen gewählt ist; und
- mindestens ein Triol P2 mit bevorzugt einer zahlenmittleren Molekularmasse von 200 bis 500 g/mol, bestimmt nach der in der Beschreibung genannten Methode, bevorzugt von 300 bis 500 g/mol, vorzugsweise von 350 bis 450 g/mol, wobei das Triol P2 bevorzugt unter den Polyethertriolen gewählt ist.

5. Zusammensetzung nach einem der Ansprüche 1 bis 5, in der:
- der Gesamtgehalt an Polyol(en) P1 5 bis 30 Gew.-%, bevorzugt 5 bis 25 Gew.-%, vorzugsweise 10 bis 20 Gew.-% bezogen auf das Gesamtgewicht der Komponente -OH beträgt; und/oder
- der Gesamtgehalt an Polyol(en) P2 5 bis 60 Gew.-%, bevorzugt 5 bis 50 Gew.-%, vorzugsweise 5 bis 40 Gew.-% bezogen auf das Gesamtgewicht der Komponente -OH beträgt.

6. Zusammensetzung nach einem der Ansprüche 1 bis 5, in der die Komponente -OH einen Gesamtgehalt an Füllstoff(en) größer als oder gleich 40 Gew.-%, vorzugweise größer als oder gleich 45 Gew.-% und vorteilhafterweise größer als oder gleich 50 Gew.-% bezogen auf das Gesamtgewicht der Komponente -OH umfasst.

7. Zusammensetzung nach einem der Ansprüche 1 bis 6, in der die Komponente -OH umfasst
- mindestens 35 Gew.-%, bevorzugt mindestens 40 Gew.-%, vorzugsweise mindestens 45 Gew.-% und vorteilhafterweise mindestens 50 Gew.-% Füllstoff(e), der(die) unter den Calciumcarbonaten, bevorzugt den hydrophobierten Calciumcarbonaten gewählt ist(sind), bevorzugt mit einem D50 kleiner als oder gleich 30 Mikrometer, vorteilhafterweise kleiner als oder gleich 10 Mikrometer; und
- 0 bis 70 Gew.-%, bevorzugt 0 bis 60 Gew.-% Kreide, vorzugsweise 40 bis 60 Gew.-% Kreide, wobei die gewichtsprozentualen Anteile auf das Gesamtgewicht der Komponente -OH bezogen sind.

8. Zusammensetzung nach einem der Ansprüche 1 bis 7, in der die Komponente -OH mindestens ein Polyamin umfasst, das mindestens eine primäre oder sekundäre AminFunktion umfasst, wobei das Polyamin bevorzugt eine zahlenmittlere Molekularmasse von 50 g/mol bis 5000 g/mol, bestimmt nach der in der Beschreibung angegebenen Methode, bevorzugt von 100 g/mol bis 3000 g/mol, vorzugsweise von 400 g/mol bis 2000 g/mol und vorteilhafterweise von 400 g/mol bis 1000 g/mol hat.

9. Zusammensetzung nach Anspruch 8, in der das Polyamin aus der Gruppe gewählt ist, die aus den Polyetheraminen, den Polyamidaminen, den dimeren oder trimeren Fettaminen, den Polyethyleniminen (PEI), den Polyethylenimin-Dendrimeren, den Polypropyleniminen (PPI), den Polypropylenimin-Dendrimeren, den Polyallylaminen, den Poly(propylen-ethylen)iminen und ihren Mischungen besteht, wobei das Polyamin bevorzugt eine Aminzahl von 20 bis 1870 mg KOH/g, bevorzugt von 50 bis 1000 mg KOH/g, vorzugsweise von 100 bis 800 mg KOH/g und vorteilhafterweise von 180 bis 250 mg KOH/g hat, wobei das Polyamin bevorzugt unter den dimeren oder trimeren Fettaminen gewählt ist, die bevorzugt zwei oder drei Primäramingruppen mit einer Aminzahl von 184 bis 291 mg KOH/g aufweisen.

10. Zusammensetzung nach Anspruch 8, in der das Polyamin einer der nachstehenden Formeln (1-1), (1-2) oder (1-3) entspricht:
H₂N-CH₂-R⁴-CH₂-NH₂ (I-1) 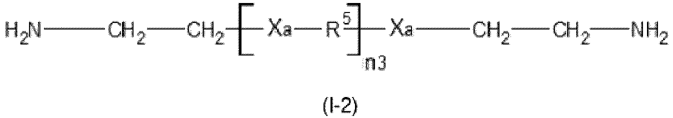 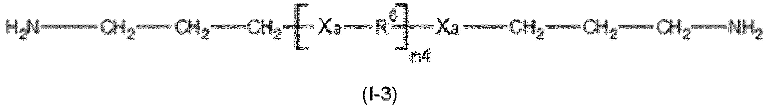
in denen:
- R⁴ eine Verbindung, ein geradkettiger oder verzweigter zweiwertiger Alkylenrest oder ein zweiwertiger Arylenrest ist, die bzw. der 1 bis 18 Kohlenstoffatome umfasst;
- R⁵ für einen geradkettigen oder verzweigten zweiwertigen Alkylenrest steht, der 2 bis 12 Kohlenstoffatome umfasst, bevorzugt Ethylen oder Propylen,
- R⁶ für einen geradkettigen oder verzweigten zweiwertigen Alkylenrest steht, der 2 bis 10 Kohlenstoffatome umfasst, bevorzugt Ethylen oder Propylen,
- Xₐ = O, S, NR⁷, worin R⁷ für H oder eine geradkettige oder verzweigte, gesättigte oder ungesättigte Alkylgruppe steht, die 1 bis 10 Kohlenstoffatome, vorzugsweise 1 bis 4 Kohlenstoffatome umfasst, wobei X bevorzugt für O steht;
- n₃ eine ganze Zahl von 0 bis 4 ist und vorteilhafterweise gleich 1 oder 2 ist;
- n₄ eine ganze Zahl von 0 bis 2 ist und vorteilhafterweise gleich 1 ist.

11. Zusammensetzung nach einem der Ansprüche 1 bis 110, in der
Polyurethan A), das mindestens zwei NCO-Endgruppen aufweist, durch Polyadditionsreaktion erhalten wird:
- mindestens eines unsymmetrischen Diisocyanats; und
- mindestens eines Polyols,
das(die) unsymmetrische(n) Diisocynat-Monomere(e) aus der Gruppe gewählt ist(sind), die besteht aus:
- Isophoron-Diisocyanat IPDI,
- Toluol-Diisocyanat TDI und insbesondere 2,4-Toluol-Diisocyanat;
- der hydrierten Form des TDI und insbesondere der hydrierten Form des 2,4-Toluol-Diisocyanats und/oder der hydrierten Form des 2,6-TDI: 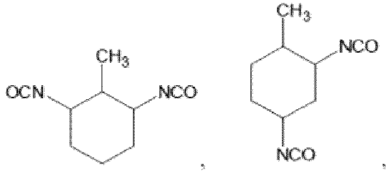
- 2,4'-Diphenylmethan-Diisocyanat 2,4'-MDI;
- der hydrierten Form von 2,4'-Diphenylmethan-Diisocyanat 2,4'-MDI; und
- ihren Mischungen;
und wobei das Polyol bevorzugt unter den Polyetherpolyolen, den Polyesterpolyolen und ihren Mischungen gewählt ist.

12. Zusammensetzung nach einem der Ansprüche 1 bis 11, in die Mengen an Isocyanatmonomer(en) und an Polyol(en), die zur Synthese des Polyurethans A) verwendet werden, derart sind, dass das Molverhältnis NCO/OH, das als r₁ notiert wird, 1,5 bis 2, stärker bevorzugt 1,6 bis 1,9 beträgt.

13. Zusammensetzung nach einem der Ansprüche 1 bis 12, in der die Komponente -NCO B) mindestens ein Polyisocyanat umfasst, das mindestens drei Isocyanat-Funktionen NCO umfasst und aus der Gruppe der Isocyanurate gewählt ist und insbesondere einem HDI-Isocyanurat entspricht.

14. Zusammensetzung nach einem der Ansprüche 1 bis 13, **dadurch gekennzeichnet, dass** es sich um einen Klebstoffzusammensetzung handelt.

15. Verwendung einer Zusammensetzung wie in einem der Ansprüche 1 bis 14 definiert als Klebstoff, Dichtstoff oder Beschichtungsstoff, bevorzugt als Klebstoff, bevorzugt zur Reparatur und/oder zum strukturellen oder semistrukturellen Kleben von Materialien im Bereich Transport, Automobil (Pkw, Bus oder Lkw), Schifffahrtswesen oder Bauwesen.

## Claims

1. Composition comprising:
- an -NCO component comprising:
A) at least one polyurethane comprising at least two NCO end groups and obtained by a polyaddition reaction:
- of at least one asymmetric diisocyanate and
- of at least one polyol,
B) at least one polyisocyanate comprising at least three isocyanate -NCO functions, chosen from the group consisting of biurets, isocyanurates, adducts of diisocyanates and of triols, and mixtures thereof;
- an -OH component comprising:
- at least one polyol;
- a total content of filler(s) of greater than or equal to 35% by weight, relative to the total weight of said -OH component,
wherein the -OH component/-NCO component ratio by volume ranges from 1/3 to 3/1.

2. Composition according to Claim 1, in which the -OH component comprises:
- at least one polyol P1 having a number-average molecular mass of greater than or equal to 1000 g/mol, determined according to the method identified in the description, preferably of less than or equal to 10 000 g/mol, preferentially of less than or equal to 5000 g/mol, advantageously of less than or equal to 3000 g/mol,
- at least one polyol P2 having a number-average molecular mass of less than or equal to 500 g/mol.

3. Composition according to either one of Claims 1 and 2, in which the -OH component comprises at least two polyols P2, including at least one polyether triol and at least one polyether diol.

4. Composition according to any one of Claims 1 to 3, in which the -OH component comprises:
- at least one diol P2 preferably having a number-average molecular mass ranging from 50 to 500 g/mol, determined according to the method identified in the description, preferably from 50 to 350 g/mol, preferentially from 80 to 200 g/mol, said diol P2 preferably being chosen from polyether diols; and
- at least one triol P2 preferably having a number-average molecular mass ranging from 200 to 500 g/mol, determined according to the method identified in the description, preferably from 300 to 500 g/mol, preferentially from 350 to 450 g/mol, said triol P2 preferably being chosen from polyether triols.

5. Composition according to any one of Claims 1 to 5, in which:
- the total content of polyol(s) P1 ranges from 5% to 30% by weight, preferably from 5% to 25% by weight, preferentially from 10% to 20% by weight, relative to the total weight of the -OH component; and/or
- the total content of polyol(s) P2 ranges from 5% to 60% by weight, preferably from 5% to 50% by weight, preferentially from 5% to 40% by weight, relative to the total weight of the -OH component.

6. Composition according to any one of Claims 1 to 5, in which the -OH component comprises a total content of filler(s) of greater than or equal to 40% by weight, preferentially of greater than or equal to 45% by weight and advantageously of greater than or equal to 50% by weight, relative to the total weight of said -OH component.

7. Composition according to any one of Claims 1 to 6, in which the -OH component comprises
- at least 35% by weight, preferably at least 40% by weight, preferentially at least 45% by weight and advantageously at least 50% by weight of filler(s) chosen from calcium carbonates, preferably hydrophobized calcium carbonates, preferably having a D50 of less than or equal to 30 microns, advantageously of less than or equal to 10 microns; and
- from 0% to 70%, preferably from 0% to 60%, by weight of chalk, preferentially from 40% to 60% by weight of chalk;
the percentages by weight being relative to the total weight of the -OH component.

8. Composition according to any one of Claims 1 to 7, in which the -OH component comprises at least one polyamine comprising at least one primary or secondary amine function, said polyamine preferably having a number-average molecular mass ranging from 50 g/mol to 5000 g/mol, determined according to the method identified in the description, preferably from 100 g/mol to 3000 g/mol, preferentially from 400 g/mol to 2000 g/mol and advantageously from 400 g/mol to 1000 g/mol.

9. Composition according to Claim 8, in which the polyamine is chosen from the group consisting of polyetheramines, polyamidoamines, fatty amine dimers or trimers, polyethyleneimines (PEIs), polyethyleneimine dendrimers, polypropyleneimines (PPIs), polypropyleneimine dendrimers, polyallylamines, poly(propylene-ethylene)imines, and mixtures thereof, said polyamine preferably having an amine number ranging from 20 to 1870 mg KOH/g, preferably from 50 to 1000 mg KOH/g, preferentially from 100 to 800 mg KOH/g and advantageously from 180 to 250 mg KOH/g, said polyamine preferably being chosen from fatty amine dimers and trimers preferably comprising two or three primary amine groups having an amine number ranging from 184 to 291 mg KOH/g.

10. Composition according to Claim 8, in which the polyamine corresponds to one of the formulae (1-1), (1-2) or (1-3) below:
H₂N-CH₂-R⁴-CH₂-NH₂ (I-1) 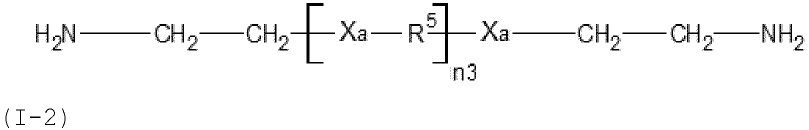 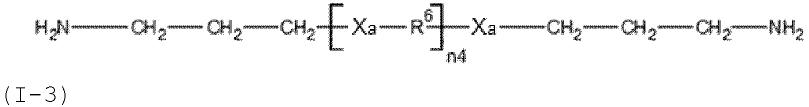
in which:
- R⁴ is a bond, a linear or branched divalent alkylene radical or a divalent arylene radical comprising from 1 to 18 carbon atoms;
- R⁵ represents a linear or branched divalent alkylene radical comprising from 2 to 12 carbon atoms, preferentially ethylene or propylene,
- R⁶ represents a linear or branched divalent alkylene radical comprising from 2 to 10 carbon atoms, preferentially ethylene or propylene,
- Xₐ = O, S, NR⁷ in which R⁷ represents H or a saturated or unsaturated and linear or branched alkyl group comprising from 1 to 10 carbon atoms, preferentially from 1 to 4 carbon atoms, X preferably representing O;
- n₃ is an integer ranging from 0 to 4 and advantageously being equal to 1 or 2;
- n₄ is an integer ranging from 0 to 2 and advantageously being equal to 1.

11. Composition according to any one of Claims 1 to 110, in which polyurethane A) comprising at least two NCO end groups is obtained by a polyaddition reaction:
- of at least one asymmetric diisocyanate and
- of at least one polyol,
said asymmetric diisocyanate monomer(s) is (are) chosen from the group consisting:
- of isophorone diisocyanate (IPDI);
- of toluene diisocyanate (TDI) and in particular of toluene 2,4-diisocyanate;
- of the hydrogenated form of TDI and in particular of the hydrogenated form of toluene 2,4-diisocyanate and/or the hydrogenated form of 2,6-TDI: 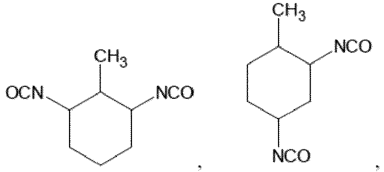
- of diphenylmethane 2,4'-diisocyanate (2,4'-MDI);
- of the hydrogenated form of diphenylmethane 2,4'-diisocyanate (2,4'-MDI); and
- of mixtures thereof;
and said polyol preferably being chosen from polyether polyols, polyester polyols and mixtures thereof.

12. Composition according to any one of Claims 1 to 11, in the amounts of isocyanate monomer(s) and of polyol(s) used for the synthesis of the polyurethane A) are such that the NCO/OH molar ratio, denoted r₁, ranges from 1.5 to 2, more preferentially from 1.6 to 1.9.

13. Composition according to any one of Claims 1 to 12, in which the -NCO component comprises B) at least one polyisocyanate comprising at least three isocyanate NCO functions chosen from the group of isocyanurates and in particular corresponding to an HDI isocyanurate.

14. Composition according to any one of Claims 1 to 13, **characterized in that** it is an adhesive composition.

15. Use of a composition as defined in any one of Claims 1 to 14 as adhesive, mastic or coating, preferably as adhesive, preferably in the repair and/or the structural or semi-structural adhesive bonding of materials in the transportation, motor vehicle (car, bus or truck), marine or construction field.
